# EUROPEAN PATENT APPLICATION

(11) **EP 0 525 342 A2**
(43) Date of publication of application: **03.02.1993**
(21) Application number: 92109823.2
(22) Date of filing: 11.06.1992
(51) Int. Cl.: F02N 11/08

(54) **Control system for the load energization by a battery**

(30) Priority: 04.07.1991 JP 258280/91; 29.07.1991 JP 276040/91; 21.08.1991 JP 291832/91; 19.09.1991 JP 311288/91; 06.03.1992 JP 97514/92; 27.03.1992 JP 117884/92; 06.05.1992 JP 157266/92
(71) Applicant: SECOH GIKEN CO., LTD., Chibuya-ku, Tokyo 150 (JP)
(72) Inventor: Bahn, Itsuki, c/o Secho Giken Co. Ltd., Shibuya-ku, Tokyo 150 (JP)
(74) Representative: Casalonga, Axel

(57) **Abstract**

The purpose of this invention is the acquisition of the means for obstructing the accident which makes it impossible to start an internal combustion engine driven by a cell motor resulting from the excessive discharge of the battery for driving it.

In this invention, the battery which is as large as the conventional one consists of two equal size small ones. Its terminals consist of a common minus pole one and two independent plus pole ones. The generator charges the battery under constant voltage. Its charging current reaches the said plus pole terminals passing two diodes respectively. The cell motor is driven through a magnetic switch device. The said two small batteries alternate in energizing the loads including the cell motor and the relay for it simultaneously through the said two plus pole terminals respectively. Every time the cell motor starts the engine once, the said two small batteries alternate in functioning resulting in ensuring the engine start.

## Description

### TECHNICAL FIELD :

This invention relates to a control system for the load energization by a battery. A cell motor is used to start an internal combustion engine of a vehicle such as a car, a ship, a cultivator and so on, but the excessive discharge of a battery for starting the cell motor prevents the vehicle from starting. The control system related to this invention can protect a vehicle against such an accident.

### BACKGROUND TECHNOLOGY:

The said accident occurs when a driver drives a car with an air conditioner, lights and so on in it. Such accidents are increasing rapidly in case of the traffic jam on the urban street at night. Considering this, the said control system related to this invention is indispensable in the field of car industry.

This invention can fulfill the purpose of obstructing the said accident by attaching this invention to the conventional car without modifying the internal structure particularly.

The indication system of the discharge quantity or the residual electricity of the car battery has been used to avoid the said accident, but is scarcely used at present by reason of its very unstable performance and much inconvenience. The attachment of a battery of small capacity which energizes the cell motor by switching manually when the engine can not be started has been used in some cars, but such an attachment is also unpopular at present by reason of the necessity of special operation and excessive attention.

The accident of the impossibility of driving the cell motor resulting from the excessive discharge of a battery of a vehicle such as a car often occurs. A cause of the accident is too long running without exchanging a battery, but a stronger cause is a recent traffic problem, namely, an urban car jam at night because of the frequent use of an air conditioner and lights during the stoppage of the car.

A half number of the said accident occurrences for which JAF (Japan Automobile Federation) were mobilized were caused by the impossibility of starting a cell motor.

This is a big problem which is required to be solved in the car industry.

It is necessary to detect the battery superannuation caused by long running and a generator trouble in order to solve the said problem of the impossibility of starting a car.

Many drivers leave their cars for a too long time with out putting out headlights. when they return to their cars, they can not start engines because of excess discharge of batteries. Such accidents often occur in fact.

Electric current required to start a cell motor is big, so the electromagnetic switching device is big and expensive. This is a problem from a viewpoint of lack of practicality. In this case, it is required that the part attached to a conventional engine starting device is small, low-priced and easy to attach in order to solve such a problem.

In case of attaching the said part to a car for example, the reconstruction of devices and attached wiring in an engine room on a large scale is undesirable because of troublesomeness and un- safety. It is ideal in that case to modify the structure only by attaching a small and light part without changing devices and attached wiring in an engine room or with minimal change of them. This invention is just ideal in that sense.

There are two problems in an electromagnetic switch device for large electric current. One is that a well-known means can not be used in order to fulfill the need of the simplification of its constitution on condition that it works positively. The other is that a conductive contact is burnt by sparks produced when large electric current to energize a cell motor passes the electromagnetic switch device which has just been switched.

This apparatus must be small and heat-resisting because it is loaded in an engine room of an vehicle.

This invention aims at supply of an control system of the load energization by a battery for enabling a vehicle such as a car to start even when a cell motor for starting the engine of the vehicle can not be driven caused by the excessive discharge of the battery.

### DISCLOSURE OF THE INVENTION :

The present invention of the control system for the load energization by the battery characterized by consisting of :
the first and the second batteries with a common first polarity terminal and two independent second polarity terminals loaded on a vehicle driven by an internal combustion engine,
a generator driven by the said internal combustion engine for charging the said first and the said second batteries through the diodes connected with the first or second polarity terminal of the said first and the said second batteries respectively,
an electric switch device including the first electric switch which is kept closed when the engine key for starting the said internal combustion engine inserted into the keyhole is turned by a certain angle on the first and the second turning stages, the second electric switch which is kept closed when the said engine key is turned by a certain angle on the final turning stage, and a spring back means which makes the said engine key turn back to the initial position when the force for turning it is removed,
an electromagnetic switch device including the first terminal, the second terminal connected with the first or second polarity terminal, and the third terminal connected with the first or second polarity terminal, the said second and the said third terminal alternating in being connected with the said first terminal every time an exciting coil in it is energized once,
the first electric circuit for starting the said internal combustion engine by energizing the cell motor through the said first terminal, the relay for driving the said cell motor, and the exciting coil of the said electromagnetic switch device through the diode connected with the said first or second polarity terminal after the said second electric switch is closed,

and
the second electric circuit for energizing the electric loads loaded on the said vehicle through the said first terminal regardless of the energizing current's passing the said first electric switch.

Furthermore the present invention of the control system for the load energization by the battery characterized by consisting of:
the first and the second batteries with a common first polarity terminal and two independent second polarity terminal loaded on a vehicle driven by an internal combustion engine,
a generator driven by the said internal combustion engine for charging the said first and the said second batteries through the diodes connected with the first or second polarity terminal of the said first and the said second batteries respectively,
an electric switch device including the first electric switch which is kept closed when the engine key for starting the said internal combustion engine inserted into the keyhole is turned by a certain angle on the first and the second turning stages, the second electric switch which is kept closed when the said engine key is turned by a certain angle on the final turning stage, and a spring back means which makes the said engine key turn back to the initial position when the force for turning it is removed,
the first rotor which rotates synchronously with the said engine key,
the second rotor set concentrically with the said first rotor and turning only in one direction by 360/n degrees ( n = 2, 4, 6,.... ) namely by the difference between the said first stage turning angle and the said second stage one driven by a one-way drive piece every time the said first rotor turns and turns back once,
frictional conductive pieces set on the circumferential surface of the said second rotor for short-circuiting,
a stator set concentrically with the said second rotor,
n/2 pairs of conductive contact pieces short-circuited by the said frictional conductive pieces and set at intervals of 360/n degrees on the circumferential surface of the said stator,
the first terminal drawn out from one of each pairs of the said conductive contact pieces,
the second terminal drawn out from one of odd-numbered pairs of the said conductive contact pieces,
the third terminal drawn out from one of even-numbered pairs of the said conductive contact pieces, the first electric circuit for starting the said internal combustion engine by energizing the cell motor through the said first terminal after closing the said second electric switch through the connection of the said second and the said third terminals with the said first or second polarity terminal respectively and through the connection of the said first terminal with the relay for driving the cell motor via the said second electric switch,

and
the second electric circuit for energizing the electric loads loaded on the said vehicle through the said first terminal regardless of the energizing current's passing the said first electric switch.

Furthermore the present invention of the control system for the load energization by the battery characterized by consisting of:
the first and the second batteries with a common first polarity terminal and two independent second polarity terminals loaded on a vehicle driven by an international combustion engine,
a generator driven by the said internal combustion engine for charging the said first and the said second batteries through the diodes connected with the first or second polarity terminal of the said first and the said second batteries,
a manual electric switch device for opening and closing the energization switch for the cell motor used to start the said internal combustion engine,
an electromagnetic switch device including the first terminal, the second terminal connected with the first or second polarity terminal, and the third terminal connected with the first or second polarity terminal, the said second and the said third terminal alternating in being connected with the said first terminal every time an exciting coil in it is energized once,
the first electric circuit for starting the said internal combustion engine by energizing the said cell motor through the said first terminal after closing the switch for energizing the relay for driving the said cell motor through the energization of the said relay and through the energization of the said exciting coil via the third and the fourth diodes connected with the said first or second polarity terminal respectively by closing the switch for energizing the said cell motor,
and
the second electric circuit for energizing the electric loads of the said internal combustion engine through the said first terminal.

Furthermore the present invention of the control system for the load energization by the battery characterized by consisting of:
the first and the second batteries loaded on a vehicle driven by an internal combustion engine with a common first polarity terminal and two independent second polarity terminals,
a generator driven by the said internal combustion engine for charging the said first and the said second batteries through the first and the second diodes connected with the first or second polarity terminal of the said first and the said second batteries,
an electric switch device opened and closed manually,
a _{D} shaped yoke with the exciting coils around two cores of it fixed to the said vehicle,
a non-magnetic disk striding over and fixed rigidly to the magnetic opening ends of two cores of the said :J shaped yoke whose inward surface diameter coincides with the appointed distance between the said magnetic opening ends,
a shaft whose both ends are supported rotatably by the bearings set at the central portions of the bottom disk of the said n shaped yoke and the said non-magnetic disk,
a magnetic rotor whose central portion is fixed to the said shaft and whose both end breadth is the same with that of the core of the said :J shaped yoke, keeping a small gap against the inward surface of the magnetic opening end of the said shaped yoke,
a spring set on the said magnetic rotor or the said shaft so that the said magnetic rotor may turn back to the initial position by stopping the energization of the said exciting coil after it turns by a certain angle being absorbed by N, S magnetic poles of the said magnetic opening ends accompanied by the energization of the said exciting coil,
a rotatable disk which turns by 360/n degrees (n is plural number more than 2) every time the said rotor turns and turns back, an electromagnetic switch device with the first terminal, the second terminal connected with the first or second polarity terminal, and the third terminal connected with the first or second polarity terminal, functioning so that the said second and the said third terminals may alternate in being connected with the first terminal by one time turning of the said rotatable disk every time the said exciting coil is energized once,
the first electric circuit for starting the said internal combustion engine by energizing the said exciting coil through the third and the fourth diodes connected with the first or second polarity terminal accompanied by the manual closing of the said electric switch device and simultaneously by closing the electric switch of the said relay through the energization of it for driving the cell motor,
and
the second electric circuit for energizing the electric loads of the said vehicle through the first terminal.

Furthermore the present invention of the control system for the load energization by the battery characterized by consisting of:
the first and the second batteries loaded on a vehicle driven by an internal combustion engine with a common first polarity terminal and two independent second polarity terminal,
the first and the second diodes (207a, 207b) connected with the said first and the said second batteries respectively in the charging direction,
the first terminal (208) connected with the input sides of the said first and the said second diodes,
an electromagnetic switch device by which the said first plus terminal (205a) and the said second plus terminal (205b) alternate in being connected with the said first terminal (208) every time the exciting coil in it is energized once through the said third and the said fourth diodes (202a, 202b) by the said first and the said second plus terminals (205a, 205b),
a conventional device and a conventional electric input terminal 201 a used for it including loads loaded on the said vehicle and a manual key switch for necessary energization control of devices such as the relay used for the energization control of the said cell motor,
an electric circuit used for energizing the exciting coil by closing the electric switch for driving the said cell motor through the operation of the said manual key switch, and for stopping the energization of the said exciting coil by opening the said electric switch through the return operation of the said manual key switch,
and
a means for connecting the said first terminal (208) with the said electric input terminal (201 a) or for canceling the connection.

Furthermore the present invention of the control system of the load energization by batteries characterized by consisting of :
a main battery which energizes the electric load and a supplementary battery which fulfills the same purpose, loaded on a vehicle which runs driven by an internal combustion engine,
the first and the second diodes whose output sides are connected with the plus terminals of the said main battery and the said supplementary battery respectively so that a generator loaded on the car may supply those batteries with the electric current for charge,
a terminal(308) connected with the input sides of the said first and the said second diodes,
an electromagnetic switch device which makes the plus terminal of the said main battery (305a) (hereinafter called " the first plus terminal") and that of the said supplementary battery (305b) (hereinafter called " the second plus terminal") alternate in being connected electrically with the said terminal (308) every time a pulse of the output current of the said first or the said second plus terminals selected by an electric switch passes an exciting coil in it through the third or the fourth diode respectively during a set time,
a means for disconnecting the input terminal of the electric load from the said first plus terminal-(305a) of the said main battery and for connecting the said input terminal with the said terminal(308),
a means for connecting the output side of the said first diode and the input side of the said third diode with the said first plus terminal(305a) and connecting the output side of the said second diode and the input side of the said fourth diode with the said second plus terminal (305b), and
a means for connecting the minus terminal of the said supplementary battery with a portion of the said vehicle for earth.

Furthermore the present invention of the control system of the load energization by batteries characterized by consisting of :
the first and the second batteries with a common terminal of a polarity and two independent terminals of the opposite polarity constituting the first polarity terminal and the second polarity terminal respectively which are loaded on a vehicle driven by an internal combustion engine,
a generator driven by the said internal combustion engine loaded on the said vehicle for charging the said first and the said second batteries through the first and the second diodes connected with the said first and the said second polarity terminals respectively,
an electric switch device used for a process in which turning an engine key inserted into a keyhole by the first set angle on the first stage makes the first electric switch closed, turning it further by the second set angle on the second stage keeps the said first electric switch closed, turning it further again by the third set angle on the third stage makes the second electric switch closed, and removing the force for turning it on the last stage makes it turn back by a spring force to the said first or the said second set angle,
an electromagnetic plunger fixed to a base plate,
a working element which moves forth by a set stroke in parallel with the said base plate through the energization of an exciting coil of the said electromagnetic plunger and back to the initial position by a spring force through shutting off the said energization,
a lever whose central portion is fixed perpendicular to an end portion of the said working element,
the first and the second projections which are projecting toward the said base plate surface from both end portions of the said lever and tilting in the absorption direction of the said working element,
a device used for a process in which the said lever and the said working element are made rotate in the right or the reverse direction only corresponding to a torque given in the right or the reverse direction and rotate back to the initial position when the said torque is removed on condition that the former kept in parallel to the said base plate rotates by a set angle while the latter moves by a set stroke by an absorption force,
a change lever made of conductive material and supported by an axle perpendicular to the said base plate at its intermediate portion so as to turn freely between the said base plate and the said working element consisting of the first lever on one side of the said axle and the second lever on the opposite side,
a device used for a process in which the movement of the said lever together with the said working element in the absorption direction through a pulse current energization of the said exciting coil on the first stage makes the third contact of the said first lever kept frictionally on the first contact fixed on the said base plate after the turn of the said change lever by a set angle through coming into contact with the said first projection of the said lever and then the next movement of the said lever together with the working element in the absorption direction through a next pulse current energization of the said exciting coil after their backward movement by a spring force on the second stage makes the said third contact kept frictionally on the second contact fixed on the said base plate after the turn of the said change lever by the set angle through coming into contact with the said second projection of the said lever,
the first and the second terminals connected with the said first and the said second contacts respectively,
the third terminal connected with the said third contact,
the first electric circuit used for a process in which closing the said second electric switch makes the said exciting coil of the said electromagnetic plunger and an exciting coil of a relay for energizing a cell motor energized through the third and the fourth diodes connected with the said first polarity terminal of the said first battery and the said second polarity terminal of the said second battery respectively,
the second electric circuit in which the said first and the said second terminals are connected with the said first polarity terminal of the said first battery and the said second polarity terminal of the said second battery respectively, and
the third electric circuit used for a process in which closing the electric switch in the said relay through the output current of the said third terminal makes the said cell motor energized, the engine started and the electric loads energized.

Furthermore the present invention of the control system of the load energization by batteries characterized by consisting of :
the first and the second batteries with a common terminal of a polarity and two independent terminals of the opposite polarity constituting the first and the second polarity terminals corresponding to the said first and the said second batteries respectively which is loaded on a vehicle driven by an internal combustion engine,
a generator driven by the said engine loaded on the said vehicle which is used for charging the said first and the said second batteries through the first and the second diodes connected with the said first and the said second polarity terminals respectively,
an electric switch device used for a process in which turning an engine key inserted into a keyhole by the first set angle on the first stage makes the first electric switch closed, turning it further by the second set angle on the second stage keeps the said first electric switch closed, turning it further again by the third set angle on the third stage makes the second electric switch closed, and removing the force for turning it on the last stage makes it turn back by a spring force to the said first or the said second set angle,
an electromagnetic switch device which makes the said first polarity terminal of the said first battery and the said second polarity terminal of the said second battery alternate in energizing the load through the energization of an exciting coil in it via the third and the fourth diodes connected with the said first and the second polarity terminals respectively every time the said second electric switch is closed once,
a device which retards closing an electric switch in a relay for energizing a cell motor by a set time when an exciting coil in the said relay is energized through the closing of the said second electric switch, and
an electric circuit used for a process in which the output current of the said electromagnetic switch device energizes the said cell motor to start the said engine and the electric loads through the closing of the said electric switch in the said relay.

Furthermore the present invention of the control system of the load energization by batteries characterize d by consisting of :
the first and the second batteries with a common terminal of a polarity and two independent terminals of the opposite polarity constituting the first polarity terminal and the second polarity terminal loaded on a vehicle driven by an internal combustion engine,
a generator driven by the said engine loaded on the said vehicle for charging the said first and the said second batteries through the said first and the said second polarity terminals,
an electric switch device used for a process in which turning an engine key inserted into a keyhole by a set angle on the first stage makes the first electric switch closed, turning it further by the second set angle on the second stage keeps the said first electric switch closed, turning it further again by the third set angle on the third stage makes the second electric switch closed, and removing the force for turning it on the last stage makes it turn back by a spring force to the said first or the said second set angle,
an electromagnetic switch device which makes the said first polarity terminal of the said first battery and the said second polarity terminal of the said second battery alternate in energizing the load through the energization of the first and the second exciting coils winding round the same magnetic core in it via the first and the second diodes connected with the said first and the said second polarity terminals respectively every time the said second electric switch is closed once,
the first electric circuit used for a process in which the output current of the said electromagnetic switch device energizes a cell motor to start the said engine through an electric switch in a relay for energizing the said cell motor closed by the energization of the third exciting coil in the said relay resulting from the closing of the said second electric switch,
the second electric circuit used for a process in which the output current of the said first and the said second polarity terminals of the said first and the said second batteries energizes the said first and the said second exciting coils and the series connection body of the said cell motor through the closing of the said second electric switch, and
the third electric circuit used for the energization of the electric loads by the output current of the said electromagnetic switch device.

Furthermore the present invention of the control system of the load energization by batteries characterized by consisting of :
the first and the second batteries with a common terminal of a polarity and two independent terminals of the opposite polarity constituting the first and the second polarity terminals respectively loaded on a vehicle driven by an internal combustion engine,
a generator driven by the said engine loaded on the said vehicle which charges the said first and the said second batteries through the said first and second polarity terminals respectively,
an electric switch device used for a process in which turning an engine key inserted into a keyhole by the first set angle on the first stage makes the first electric switch closed, turning it further by the second set angle on the second stage keeps the said first electric switch closed, turning it further again by the third set angle on the third stage makes the second electric switch closed, and removing the force for turning it on the last stage makes it turn back by a spring force to the said first or the said second set angle,
an electromagnetic plunger fixed to a base plate,
a working element moving in parallel with the said base plate by a set stroke absorbed by the said electromagnetic plunger through the energization of an exciting coil in it and moving back by a spring force when the energization is shut off,
a lever whose central portion is fixed on an end portion of the said working element so as to be perpendicular to it,
the first and the second projections projecting toward the said base plate surface from both the ends of the said lever and tilting in the absorption movement direction of the said working element,
a device which makes the said lever turn in the right or the reverse direction from the initial position to the said base plate only corresponding to a torque given in the right or the reverse direction respectively and turn back to the said initial position through the removal of the torque,
a change lever supported by an axle perpendicular to the said base plate at its intermediate portion so as to turn freely between the said base plate and the said working element constituting the first lever and the second lever extending on both sides of the said axle respectively,
a device used for a process in which the movement of the said lever together with the said working element in the absorption direction through a pulse current energization of the said exciting coil makes the said change lever turn by a set angle through the first said projection coming into contact with the said first lever and then the next movement of the said lever together with the said working element in the absorption direction through the next pulse current energization of the said exciting coil after the backward movement of the said working element by a spring force makes the said change lever turn in the reverse direction by the set angle through the said second projection coming into contact with the said second lever followed by the next backward movement of the said working element by a spring force,
the first copper plate fixed to the said base plate,
the first and the second leaf springs whose end portions are fixed to the said base plate,
the second and the third copper plates fixed to the other end portions of the said first and the said second leaf springs respectively and arranged on both sides of the said first copper plate leaving spaces therebetween in parallel to it respectively,
a device which makes the said second or the said third copper plate come into contact with the said first copper plate for electric conduction through the press of the said first or the said second leaf spring by the end portion of the said change lever corresponding to its left or right turn,
the first, the second and the third terminals connected with the said first, the said second and the said third copper plates respectively,
the first electric circuit used for a process in which the closing of the said second electric switch makes the said exciting coil in the said electromagnetic plunger and an exciting coil in a relay for energizing a cell motor energized through the second and the third diodes connected with the said first polarity terminal of the said first battery and the said second polarity terminal of the said second battery respectively through the closing of the said second electric switch,
the second electric circuit in which the said first and the said second terminals are connected with the said first polarity terminal of the said first battery and the said second polarity terminal of the said second battery respectively, and
the third electric circuit used for a process in which the said third terminal supplies the said cell motor for starting the said engine and the electric loads with the output current through the closing of an electric switch in the said relay.

Furthermore the present invention of the control system of the load energization by batteries characterized by consisting of :
the first and the second batteries with a common terminal of a polarity and two independent terminals of the opposite polarity constituting the first and the second polarity terminals which are loaded on a vehicle driven by an internal combustion engine,
a generator driven by the said engine loaded on the said vehicle for charging the said first and the said second batteries through the said first and the said second polarity terminals respectively,
an electric switch device used for a process in which turning an engine key inserted into a keyhole by the first set angle on the first stage makes the first electric switch closed, turning it further by the second set angle on the second stage keeps the said first electric switch closed, turning it further again by the third set angle on the third stage makes the second electric switch closed, and removing the force for turning it on the last stage makes it turn back to the first or the second set angle by a spring force,
a rotary cam similar to a disk which rotates in one direction by 360/2n degrees (where n is equal to a positive integral number more than 1) every time an exciting coil of an electromagnetic plunger or a rotary solenoid is energized once,
n projections projecting at equal intervals along the circumference of the said rotary cam,
the first copper plate fixed to a base plate and the first and the second leaf springs whose end portions are fixed to the said base plate,
the second and the third copper plates fixed to the other end portions of the said first and the said second leaf springs and arranged on both sides of the said first copper plate in parallel to it leaving spaces therebetween,
a device used for a process in which the said projections along the circumference of the said rotary cam press the said first and the said second leaf springs alternately according to its rotation and make the said second and the said third copper plates come into contact with the said first copper plate for electric conduction alternately thereby,
the first, the second and the third terminals connected with the said first, the said second and the said third copper plates respectively,
the first electric circuit used for a process in which the said exciting coil of the said electromagnetic plunger or the said rotary solenoid is energized through the first and the second diodes connected with the said first polarity terminal of the said first battery and the said second polarity terminal of the said second battery respectively and an exciting coil in a relay for energizing a cell motor is also energized after the closing of the said second electric switch,
the second electric circuit in which the said first and the said second terminals are connected with the said first polarity terminal of the said first battery and the said second polarity terminal of the said second battery respectively, and
the third electric circuit used for a process in which the said third terminal supplies the said cell motor for starting the said engine and the electric loads with the output current through the closing of an electric switch in the said relay.

Furthermore the present invention of the control system of the load energization by batteries loaded on a vehicle driven by an internal combustion engine characterized by consisting of :
the first and the second batteries with a common plus terminal and two independent minus terminals constituting the first and the second minus terminals respectively which are loaded on the said vehicle driven by the said engine,
a generator driven by the said engine loaded on the said vehicle for charging the said first and the said second batteries through two diodes connected with the said first and the said second minus terminals respectively,
an electric switch device used for a process in which turning an engine key inserted into a keyhole by the first set angle on the first stage makes the first electric switch closed, turning it further by the second set angle on the second stage keeps the said first electric switch closed, turning it further again by the third set angle on the third stage makes the second switch closed, and the removal of the force for turning it on the last stage makes it turn back to the said first or the said second set angle,
an electric circuit comprising the first and the second diodes connected with the said first minus terminal and the said second minus terminal respectively, the said common plus terminal, the said second electric switch and the first exciting coil in series,
an electromagnetic switch device used for a process in which the second and the third terminals alternate in being connected with the first terminal every time the said second electric switch is closed once for energizing the said first exciting coil,
a means for connecting the said second and the said third terminals with the said the first minus terminal of the said first battery and the said second minus terminal of the said second battery respectively,
the first electric circuit used for a process in which after the closing of the said second electric switch the second exciting coil in a relay for energizing a cell motor is energized, the electric switch in the said relay is closed, the said cell motor inserted between the said first terminal and the said common plus terminal is energized and the said engine is started, and
the second electric circuit inserted between the said common plus terminal and the said first terminal or the said first and the said second diode and used for a process in which the energization of the electric load is controlled through the said electric switch or each electric switch attached to each electric load.

Furthermore the present invention of the control system of the load energization by batteries loaded on a vehicle driven by an internal combustion engine as claimed in the last invention, wherein an electromagnetic switch device is characterized by consisting of :
an electromagnetic plunger fixed to a base plate,
a working element which moves in the absorption direction by a set stroke in parallel to the said base plate when an exciting coil in the said electromagnetic plunger is energized and moves back by a spring force when the energization of it is shut off,
a lever whose central portion is fixed to an end portion of the said working element so as to be perpendicular to it,
the first and the second projections projecting toward the said base plate surface from both ends of the said lever and tilting in the absorption direction,
a device which makes the said lever turn in the right or the reverse direction from the initial position in parallel to the said base plate only corresponding to a torque given in the right or the reverse direction respectively and turn back to the said initial position through the removal of the said torque,
a change lever supported by an axle perpendicular to the said base plate at its intermediate portion so as to turn freely between the said base plate and the said working element constituting the first lever and the second lever extending on both sides of the said axle respectively,
a device used for a process in which the movement of the said lever together with the said working element in the absorption direction through a pulse current energization of the said exciting coil makes the said change lever turn by a set angle through the said first projection coming into contact with the said first lever and the next movement of the said lever together with the said working element in the absorption direction through the next pulse current energization of the said exciting coil after the backward movement of the said working element by a spring force makes the change lever turn in the reverse direction by the set angle through the said second projection coming into contact with the said second lever followed by the next backward movement of the said working element by a spring force, the first copper plate fixed to the said base plate,
the first and the second leaf springs whose end portions are fixed to the said base plate,
the second and the third copper plates fixed to the other end portions of the said first and the said second leaf springs respectively and arranged on both sides of the said first copper plate leaving spaces therebetween in parallel to it respectively,
a device which makes the said second or the said third copper plate come into contact with the said first copper plate for electric conduction through the press of the said first or the said second leaf spring by the end portion of the said change lever corresponding to its left or right turn, and
the first, the second and the third terminals connected with the said first, the said second and the said third copper plates respectively.

Furthermore the present invention of the control system of the load energization by batteries loaded on a vehicle driven by an internal combustion engine as claimed in the present invention before last, wherein an electromagnetic switch device is characterized by consisting of :
a rotary cam similar to a disk which rotates in one direction by 360/2n degrees (where n is equal to a positive integral number more than 1) every time an exciting coil of an electromagnetic plunger or a rotary solenoid is energized once,
n projections projecting at equal intervals along the circumference of the said rotary cam,
the first copper plate fixed to the said base plate,
the first and the second leaf springs whose end portions are fixed to the said base plate,
the second and the third copper plates fixed to the other end portions of the said first and the said second leaf springs and arranged on both sides of the said first copper plate in parallel to it leaving spaces therebetween,
a device used for a process in which the said projections along the circumference of the said rotary cam press the said first and the said second leaf springs alternately according to its rotation and make the said second and the said third copper plates come into contact with the said first copper plate for electric conduction alternately thereby, and
the first, the second and the third terminals connected with the said first, the said second and the said third copper plates respectively.

The energizing control system related to this invention has a case containing two batteries.

The first polarity terminal for both is common and the second polarity terminal for both is independent.

The sum of the capacity values of both is the same with the capacity value of a well-known battery of a car or lower than it.

One of the said two batteries is called the first battery and the other the second battery. By using a manual key switch for driving a cell motor, an electric circuit including either of the first and the second batteries alternately works for running of a vehicle. A generator charges both the batteries via diodes while the vehicle runs. A room air conditioner, lights and so on are energized by either battery alternately.

So, when the first battery, for example, has consumed electricity excessively after energizing a room air conditioner, car lights and so on, a generator begins to supply the battery with electricity during running. Then if you turn an engine key manually for start after a vehicle stops, the second battery will begin to energize them including a cell motor for the first battery because it has been charged during running.

Thus the cell motor is driven normally and the engine starts, that is to say, an accident that obstructs running can be avoided.

The said excessive discharge of the battery obstructing running occurs by the following three reasons.

The first reason is to stop a vehicle leaving headlights lightened or a room air conditioner working at night.

The second reason is to get off a vehicle leaving head lights lightened.

The third reason is to use the battery for a long time until its capacity diminishes for superannuation. The accident for the first or the second reason is avoided by the energization control system related to this invention.

The accident for the third reason is avoided by exchanging the battery at a pertinent time which is detected by an attachment to the energization control system related to this invention mentioned later.

Furthermore, one of the attachments to the energization control system related to this invention is an alarm system working when the voltage of the plus terminal of the first or the second battery exceeds the set value for driving a cell motor.

In case the alarm system works frequently when a cell motor starts the engine of the vehicle, the driver can know a trouble on the battery or the generator by hearing the alarm and settle the trouble by exchanging the battery or by repairing the generator.

In the result, a driver can drive his vehicle without any anxiety.

This invention adds the following action to the above one.

Taking the case of a car, a small magnetic switch device can be attached to the energization control system by this invention only by exchanging the short wiring connected with the battery without modifying all wiring in an engine room, so it can remodel a car easily.

According to this invention, when a specially attached push button switch is closed, the electromagnetic switch device is switched so that electric loads comprising the cell motor may be energized by a supplementary battery charged while the vehicle is running. Therefore the cell motor is driven normally and the engine is started. Thus the accident which causes an engine stop is obstructed effectively. It is an action of this invention.

In addition, the use of an electric switch which is a key switch for starting the engine instead of a push button switch mentioned above facilitates the operation because when the cell motor for starting the engine can not be driven the batteries alternate automatically in driving the cell motor by closing the electric switch. It is another action of this invention.

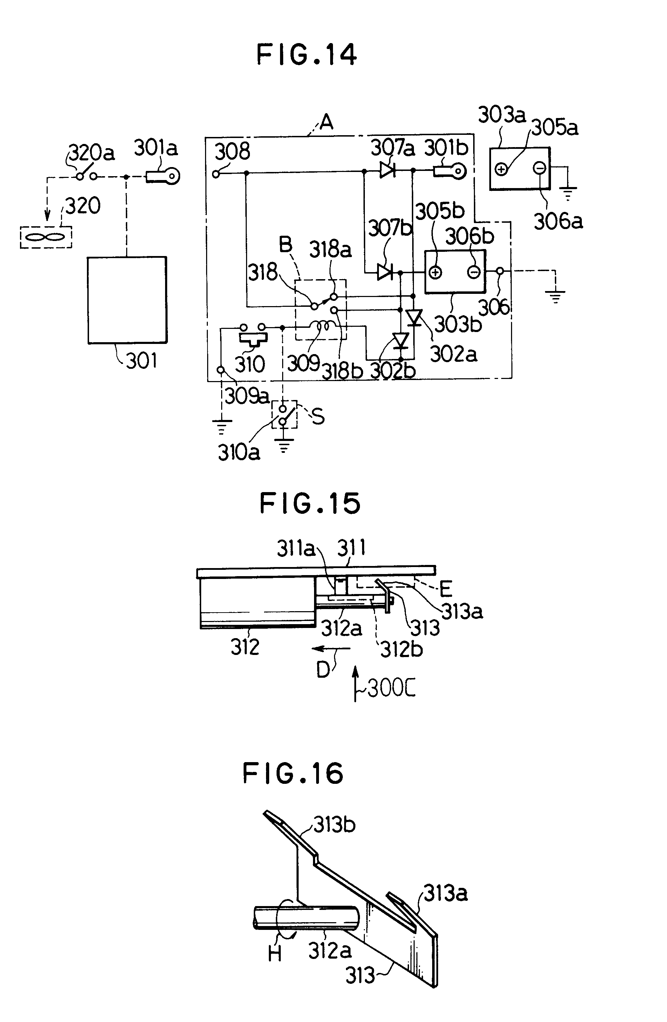

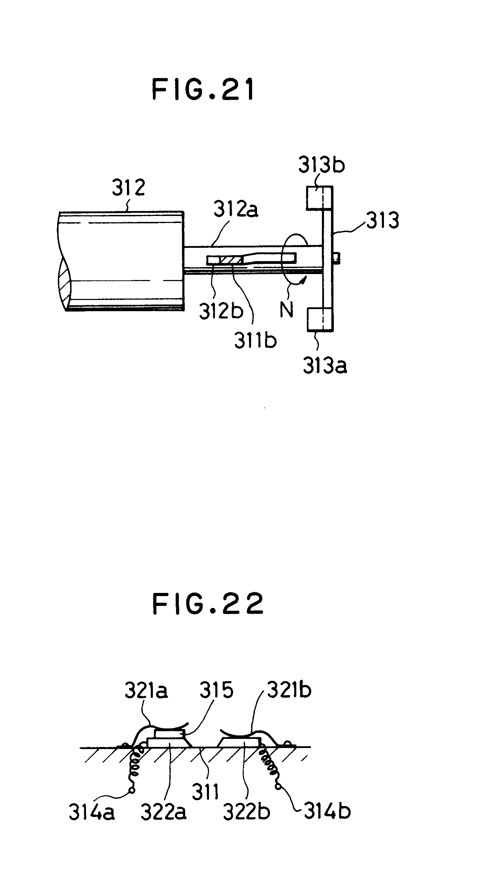

The rotation of the working element 312a of the electromagnetic plunger 312 in the arrow H direction shown in FIG.16 is controlled by a leaf spring 311 a and a slit 312b shown in FIG.15. As the slit 312b is not straight but curved as shown in FIG.21, although its movement by an absorption force stops halfway by accident, the following action is not obstructed. It is another action of this invention.

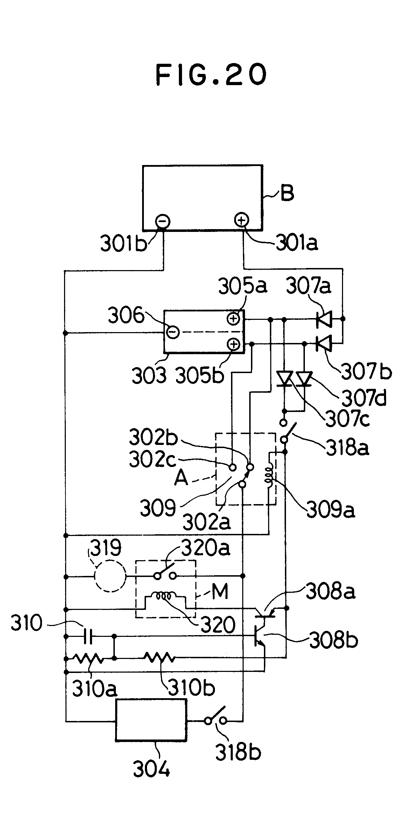

The exciting coil 320 of a relay M shown in FIG.20 is arranged so that it may be energized after the action of the electromagnetic switch device A is finished through a retardation means, so large electric current passes the cell motor after the action of the switch 309 is finished.

Thus the sparking during switching is obstructed. It is another action of this invention.

The electromagnetic switch device is switched on the initial stage of driving the cell motor,so the accumulated magnetic energy of the cell motor is discharged and it is feared that the switching element is burnt by sparks produced thereat.

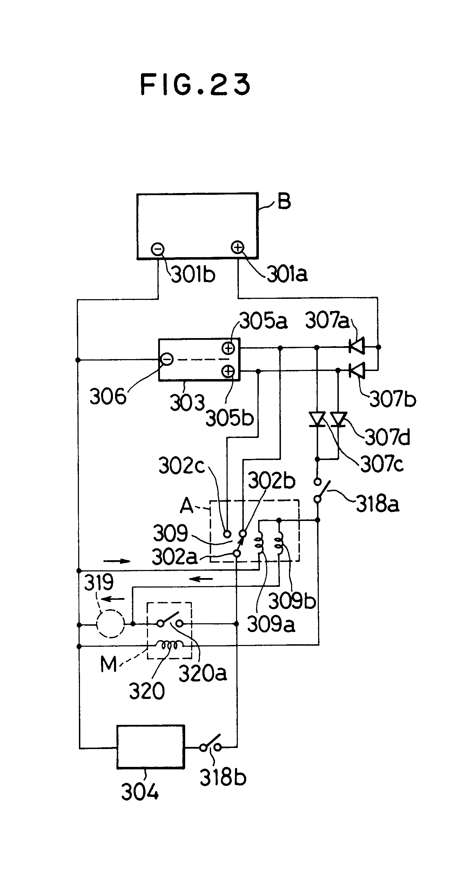

In this invention, the electromagnetic switch device A includes exciting coils 309a, 309b as shown in FIG.23 and one of them 309b discharges the said accumulated magnetic energy. Thus the switching element is prevented from burning.

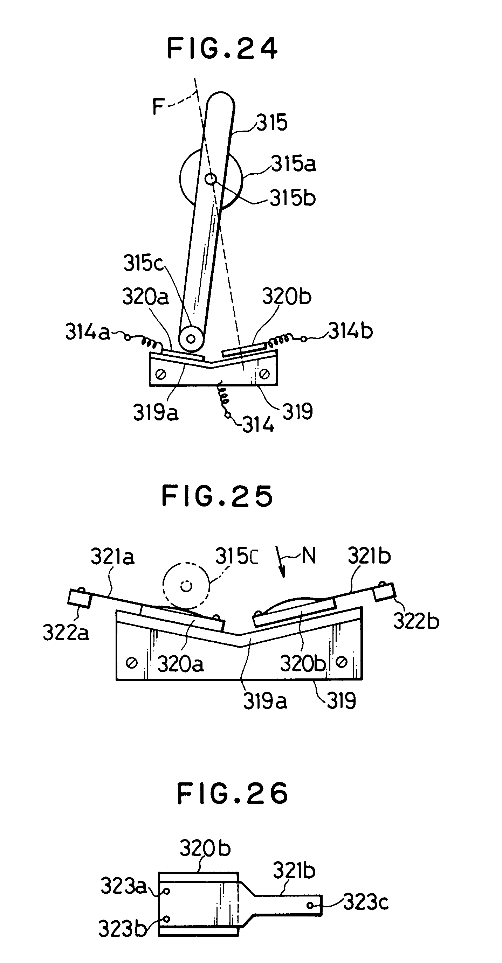

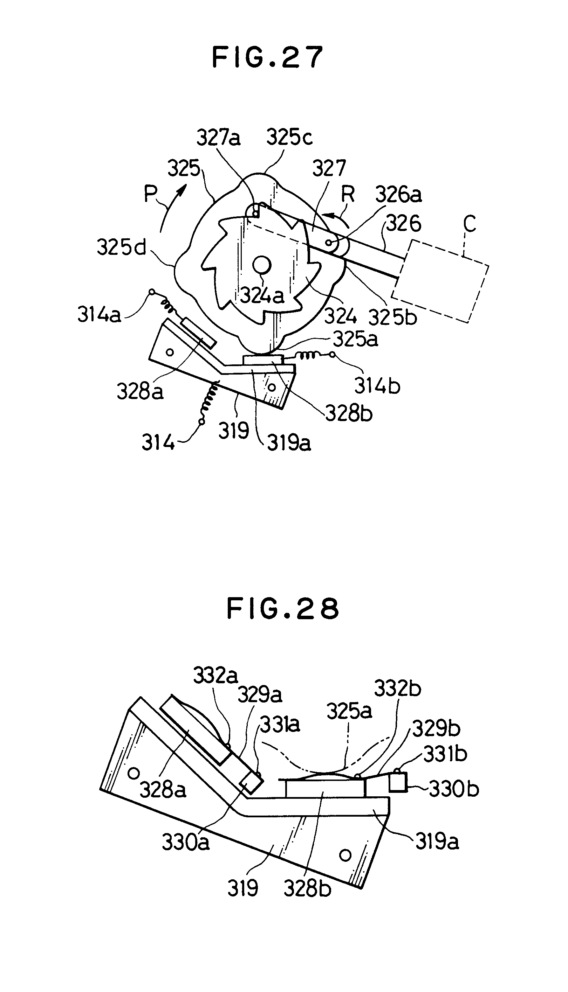

As shown in FIG.25 and FIG.28, the electromagnetic switch device in which copper plates 320a, 320b or 328a, 328b alternate in coming into contact with the copper plate 319a every time the electromagnetic plunger is energized is adopted in this invention. It simplifies the constitution and enables the positive opening and closing for large electric current towards the cell motor. It is another action of this invention.

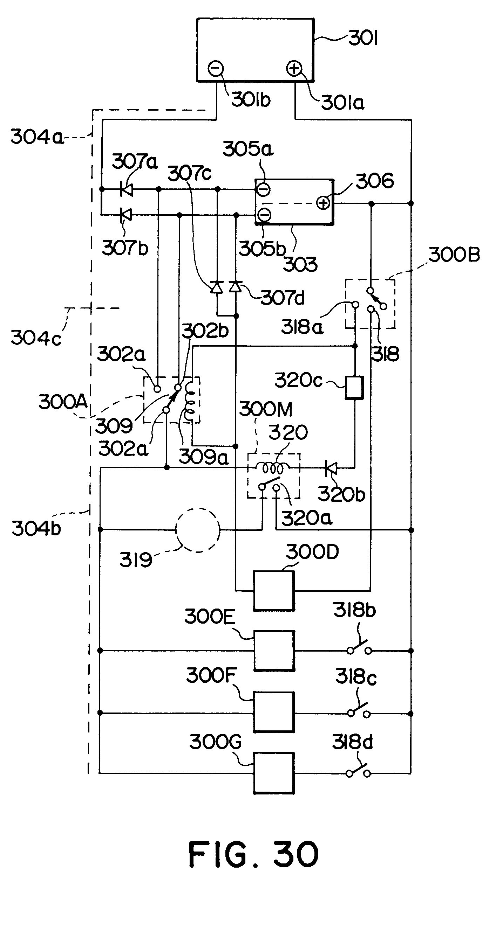

A thick copper plate is used as a switch contact because it stands large electric current in a switch action. The retardation circuit 320c shown in FIG.30 can also obstruct the above-mentioned burn.

From the above description, the effects of this invention are as follows :
This invention can prevent the accident that a car can not run with a big frequency by the impossibility of driving a cell motor resulting from the excessive discharge of a battery or the long time stopping with head lights lightened under the influence of the abnormal traffic condition, especially a night traffic jam.

In addition, the attachment of an alarm system related to this invention can detect the superannuation of a battery caused by a long time use and the trouble of a generator.

Furthermore, the capacity of the battery related to this invention can be made smaller than that of the conventional one.

In this invention, the battery case containing the first and the second batteries can be made in the same form with the conventional one, so easy exchangeability can be realized.

Therefore, when a driver often drives a vehicle at night, he can avoid an accident obstructing starting an engine by exchanging the battery in advance, and he can also avoid a trouble hindering safe operation by attaching the energization control system related to this invention easily to his favorite car without modifying wirings and parts in an engine room of the car.

Furthermore, taking the case of a car, the battery becomes unable to drive the cell motor after a long stop of the car resulting from the excessive discharge of the battery under the influence of the abnormal traffic condition, especially the night traffic jam, or from leaving headlights lightened for a long time, which prevents the said accident which often occurs.

In this invention, the battery case containing the first and the second batteries can be made in the same form with the conventional one, so easy exchangeability can be realized. A driver can avoid a trouble hindering safe operation by attaching the energization control system related to this invention easily to his favorite car without modifying wirings and parts in an engine room of the car.

A magnetic switching device which is put in a special position in this invention can be made in small dimensions and at a small cost.

In this invention, such an assembly as is surrounded by a chain line shown in FIG.14 has only to be attached to a vehicle such as a car without the modification of the vehicle elements, so it can be said that this invention makes remodelling easy and has a good effect on safe drive from technical point of view.

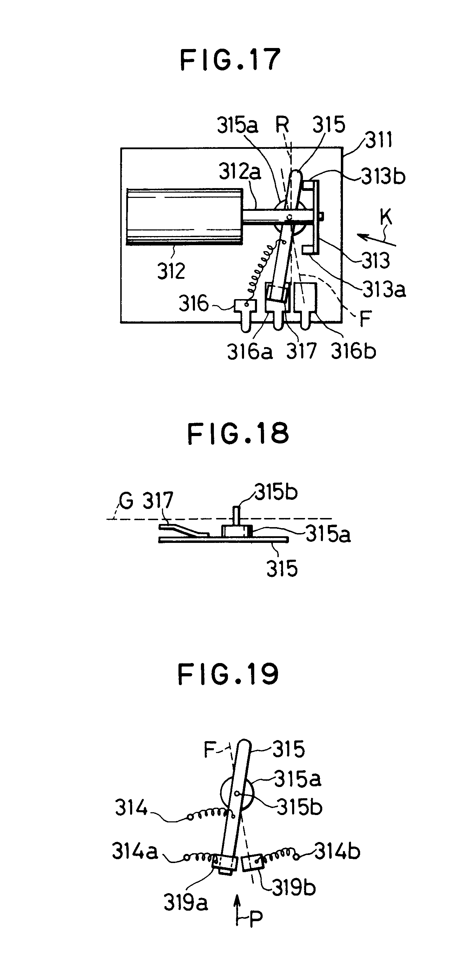

Furthermore, in case the closing time of the electric switch for driving the cell motor is very short or in the other case, when a change lever 315 stops and is held at the position near a broken line R shown in FIG.17, it can not step forward next time, but this invention can avoid such an accident.

Moreover, in this invention the relay M works after the electromagnetic switch device A works through a retardation means, so this invention prevents the conductive contact from burning by sparks produced in the electromagnetic switch device.

This invention also prevents the switching element of the electromagnetic switch device A from burning and the battery from damage.

In addition, this invention simplifies the constitution of the electromagnetic switch device A and enables the switching for large electric current.

### BRIEF DESCRIPTION OF DRAWINGS :

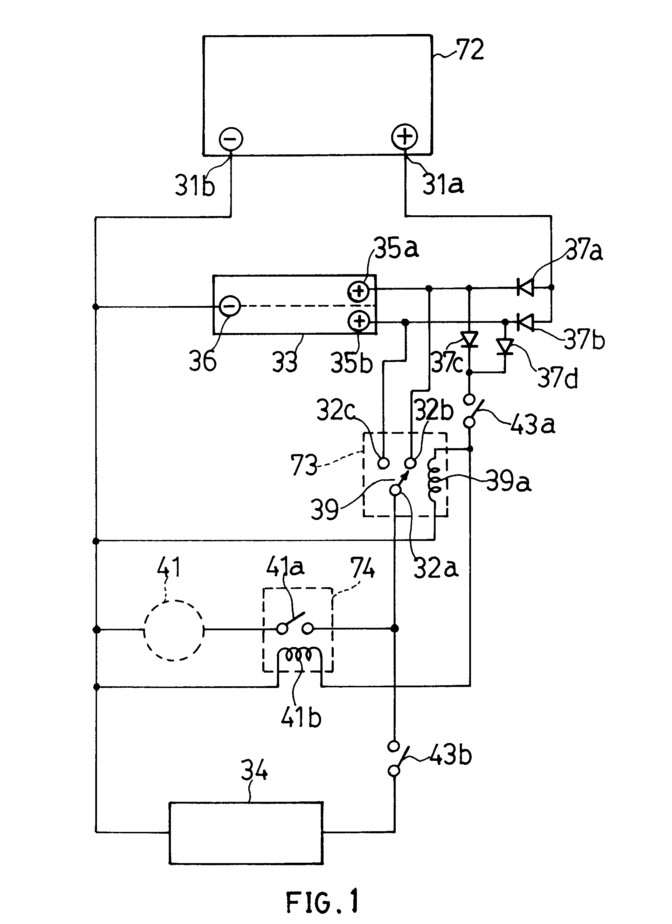

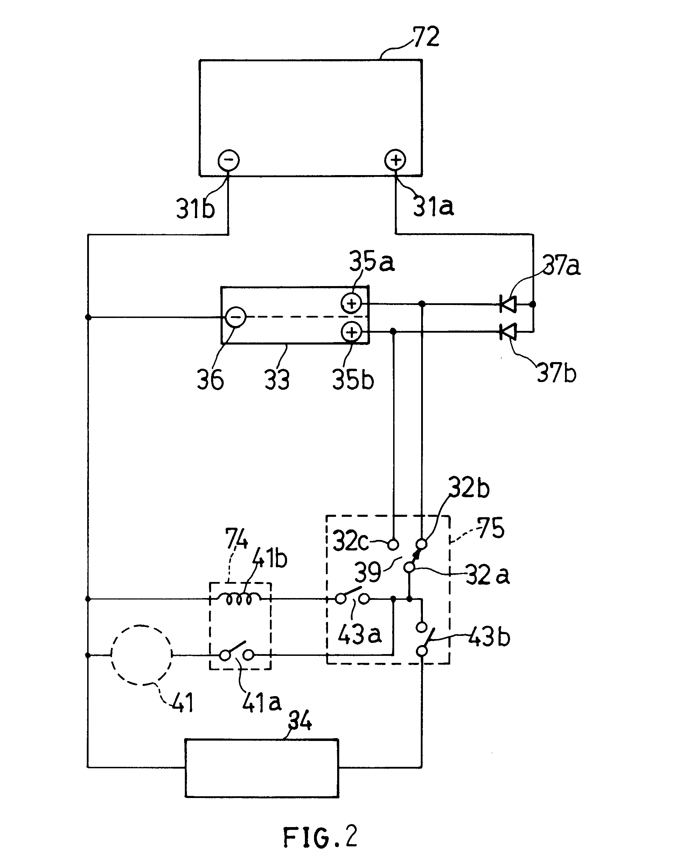

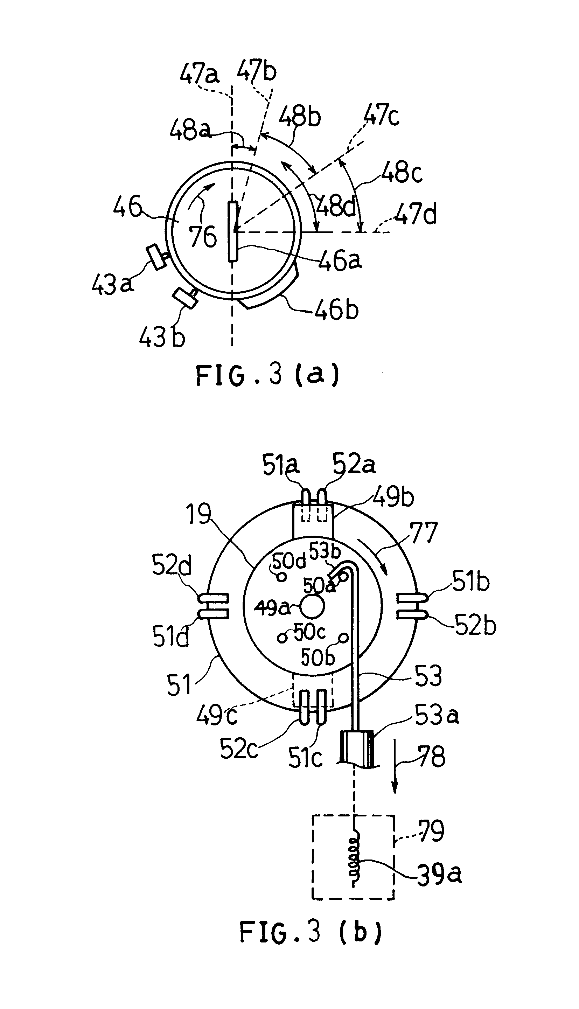

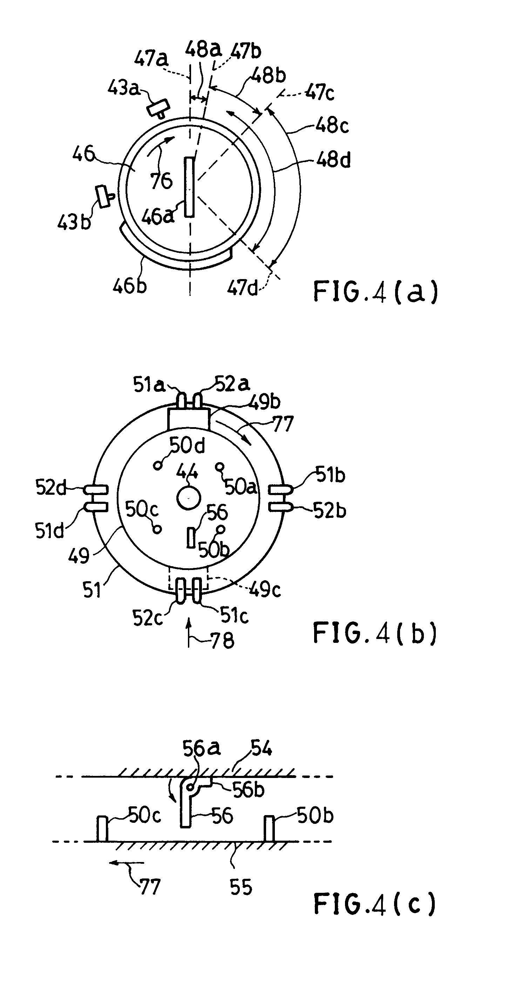

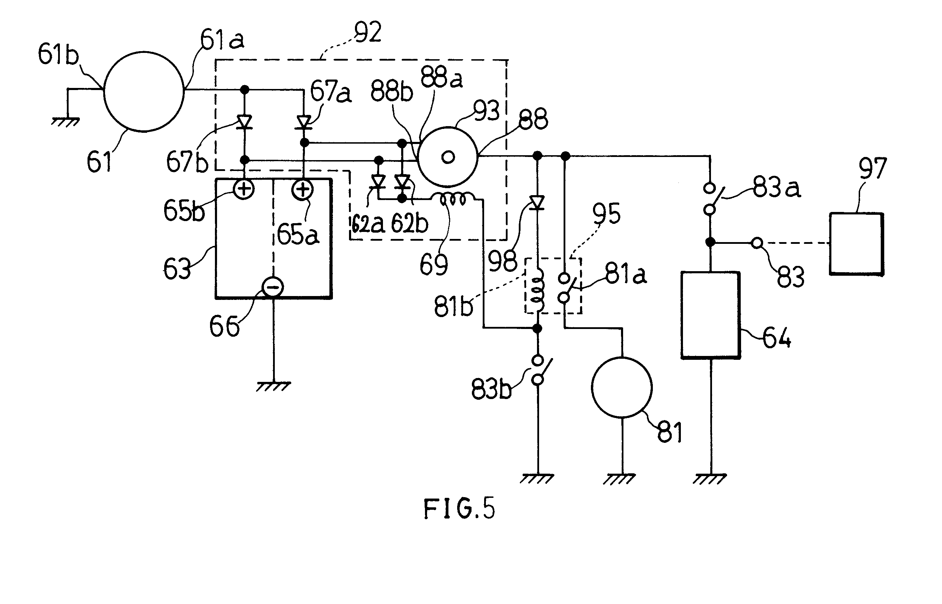

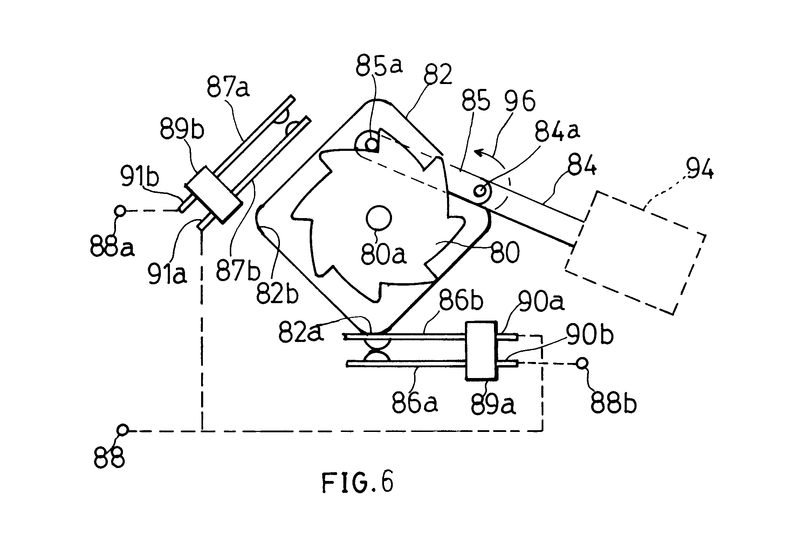

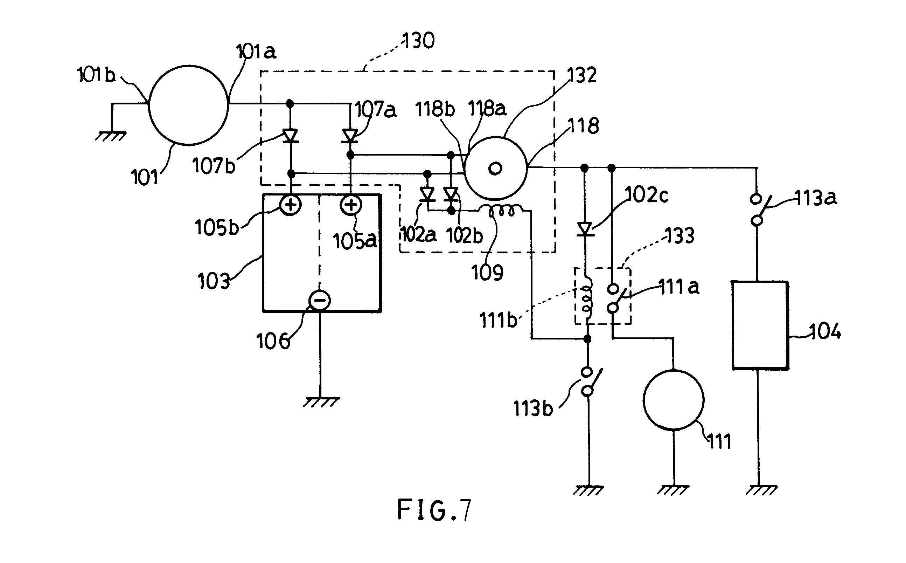

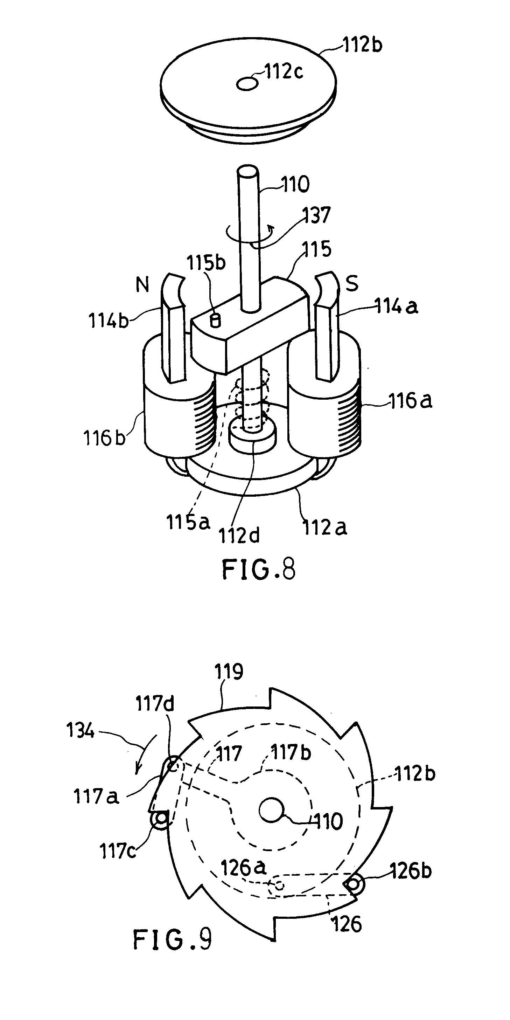

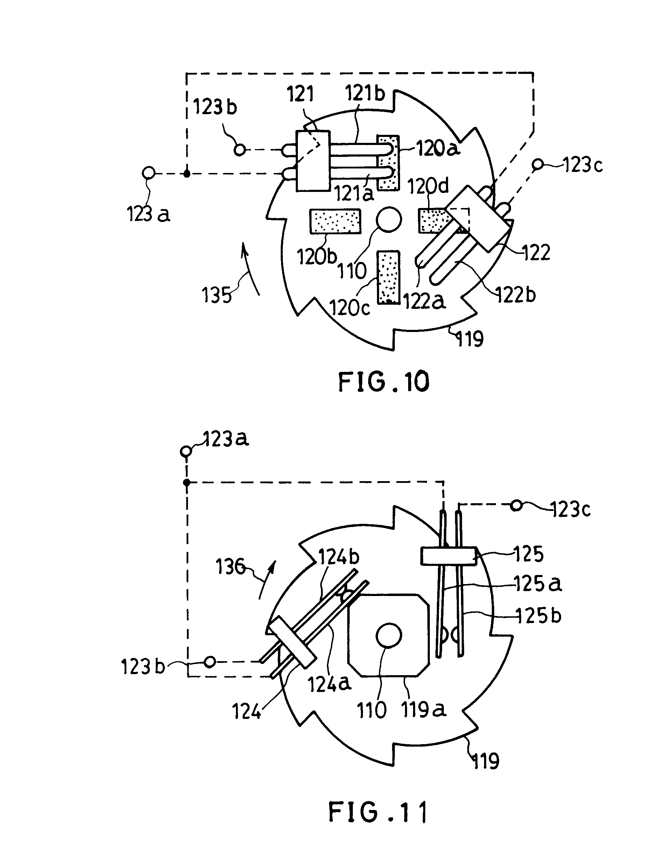

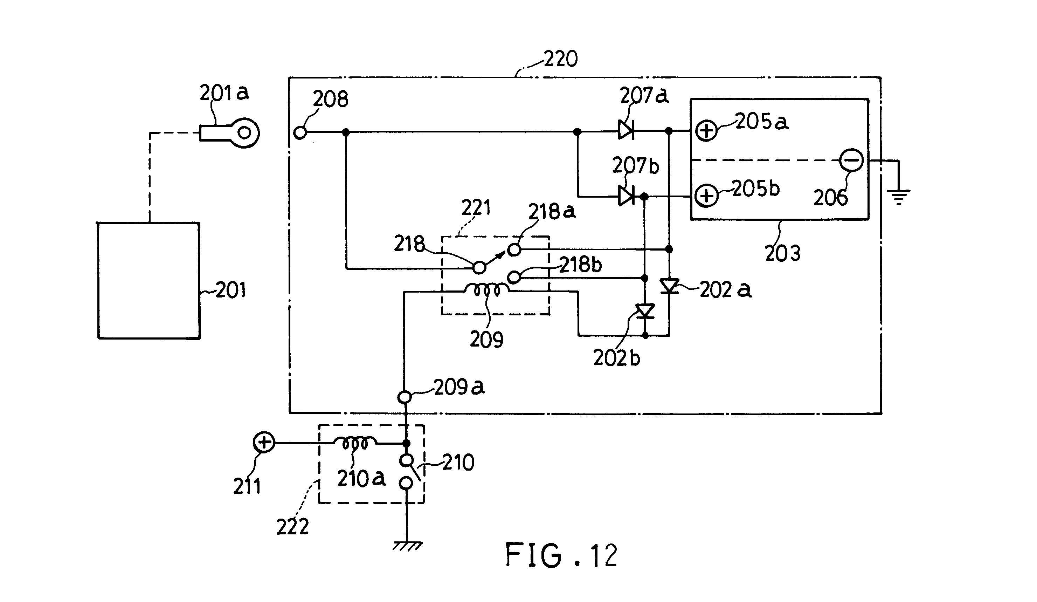

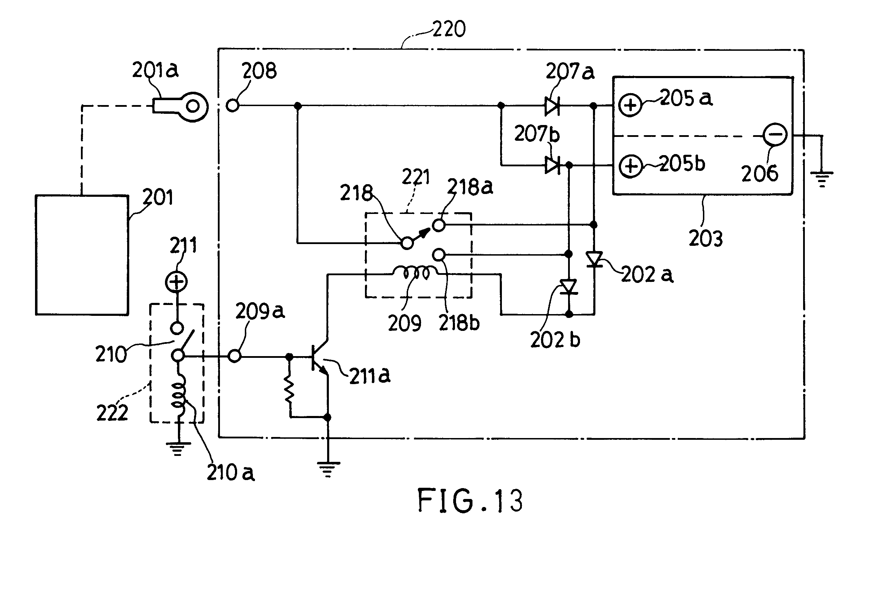

FIG.1 and FIG.2 show other electric circuits related to this invention. FIG.3(a) shows a structure of an engine key insertion part. FIG.3(b) shows a structure of a battery switching device. FIG.4(a) shows another structure of an engine key insertion part. FIG.4(b) shows another structure of a battery switching device. FIG.4(c) shows aportion of the battery switching device shown in FIG.4(b). FIG.5 shows an electric circuit related to this invention. FIG.6 shows a structure of a magnetic switch device related to this invention. FIG.7 shows another electric circuit related to this invention. FIG.8 shows a driving part of the electromagnetic switch device shown in FIG.7. FIG.9 shows a ratchet of the electromagnetic switch device. FIG.10 shows a frictional switch driven by a ratchet. FIG.11 shows another type of a frictional switch driven by a ratchet. FIG.12 shows an electric circuit related to this invention. FIG.13 shows another electric circuit related to this invention.

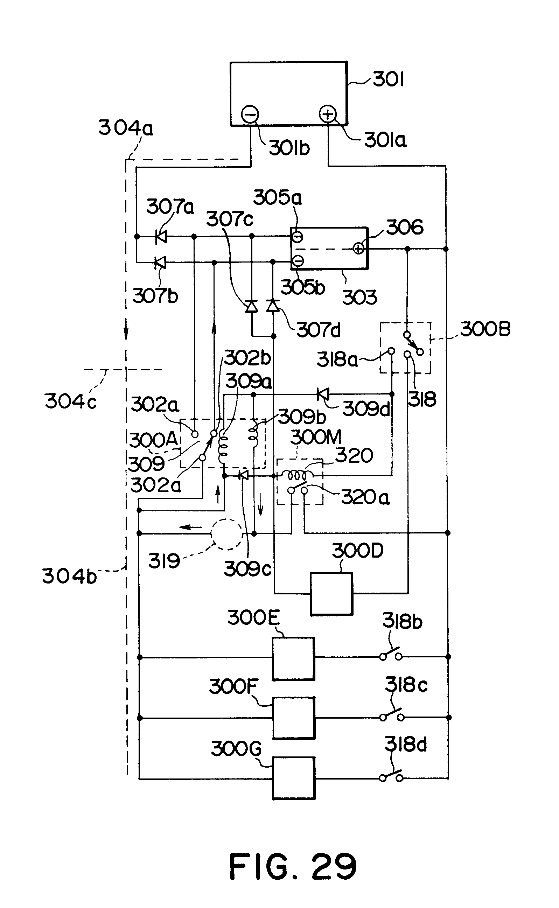

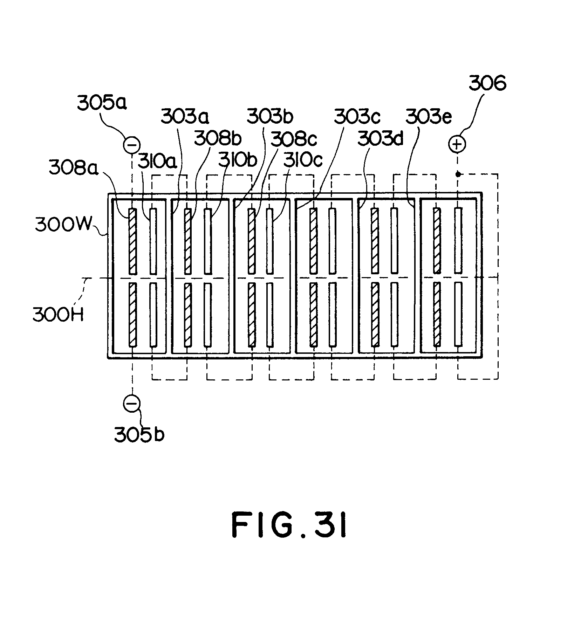

FIG.14 shows the drawing of an electric circuit of this invention, FIG.15 shows the drawing for the explanation of the driving apparatus of the electromagnetic switch device B shown in FIG.14, FIG.16 shows the bird's-eye view of the working element 312a and the lever 313, FIG.17 shows the arrow 300C direction view referring to FIG.15, FIG.18 shows the drawing for the explanation of the change lever 315, FIG.19 shows the drawing for the explanation of another working example related to the change lever 315, FIG.20 shows the drawing of another electric circuit of this invention FIG.21 shows the drawing for the explanation of the slit 312b of the working element 312a, FIG.22 shows the drawing for the explanation of another working example related to knife switch terminal plates 319a, 319b shown in FIG.18, FIG.23 shows the drawing of another electric circuit of this invention, FIG.24 shows the drawing for the explanation of another working example related to the change lever 315, FIG.25 shows the drawing for the explanation of the actions of the copper plates 319, 319a and the copper plates 320a, 320b, FIG,26 shows the plan of the copper plate 320b, FIG.27 shows the drawing for the explanation of another working example of the electromagnetic switch device A, FIG.28 shows the drawing for the explanation of the actions of the copper plates 319, 319a and the copper plates 328a, 328b similar to those shown in FIG.25, FIG.29 shows an electric circuit of this invention, FIG.30 shows another working example of the electric circuit of this invention, FIG.31 shows a figure for the explanation of a battery 303.

### THE BEST WORKING EXAMPLE FOR THIS INVENTION :

The best working example for this invention is as follows :

FIG.1 shows an electric circuit as a working example of this invention. The generator 72 shown in FIG.1 is driven by the engine of a vehicle and a well-known one.

The plus terminal 31 a and the minus terminal 31 b of the generator are utilized to generate electric output. The output control device for the fluctuation of the battery voltage which may be included in the generator 72 is not illustrated in FIG.1. As for the battery 33 attached to, its external appearance is the same with the conventional type, but it consists of two small batteries of the same voltage (12 volts for example) and of the same capacity put in a case, which is different from the conventional type. The minus terminal 36 is common and the plus terminals 35a, 35b are independent each other.

As described later, in this invention, either of the said two small batteries energizes the load and is charged via the diodes 37a, 37b by the generator. A small battery on the plus terminal 35a side is named the first battery and the other on the plus terminal 35b side the second battery. They are charged by the said conventional method. In case of excessive charge, the diodes 37a, 37b are arranged so that they may decrease the charging current to the utmost. It goes without saying that the other method different from above may be adopted to fulfill the same purpose.

A broken lined square part 73 in FIG.1 shows an electromagnetic switch device including a switch 39 and an exciting coil 39a. Another broken lined square part 74 shows an energization control switch including an electric switch 41 a and an exciting coil 41 b. When the latter is energized, the former is closed automatically to drive a cell motor for starting the engine. The load 34 represents headlights, room lights, window opening devices and other loads.

The outside view of the said broken lined square part 73 is illustrated in FIG.3. In FIG.3(a), when a driver turns the engine key in the arrow 76 direction after inserting it into the keyhole 46a, a circumference projection 46b of a rotor 46 which rotates synchronously pushes the working elements of the electric switches 43b, 43a in order so that they 43b, 43a may be closed in order. When the keyhole 46a rotates from a broken line 47a to another broken line 47b by an angle 48a by the engine key, it stops and does not turn back even if he lets go of his hold. When it rotates from there to another broken line 47c by another angle 48b further, the projection 46b pushes the working element of the electric switch 43b to close it. When the keyhole 46a rotates to another broken line 47d by another angle 48c furthermore, the projection 46b pushes the working element of the electric switch 43a to close it. The curved arrow 48d shows the closing range of the electric switch 43b. When he lets go of his hold after turning the engine key to the broken line 47d, that is to say, when his driving force is removed from the engine key at that position, the rotor 46 turns back by a spring force and the keyhole 46a stops and is kept at the position of the broken line 47c. FIG.3(b) shows a rotor 49 arranged concentrically with the rotor 46 on the back side of it so as to rotate with it synchronously and a stator 51 arranged concentrically with it on the back side of it. The rotor 49 rotates with the rotor 46 synchronously in the curved arrow direction 77. The rotor 49 is fitted with four pins 50a, 50b, 50c, 50d at angular intervals of 90 degrees. An axle 49a is fixed to a portion of the vehicle body. The rotor 49 mounts on the axle 49a with which it can rotate freely in contact and the stator 51 is fixed to the axle 49a. A frictional conductive element 49b is fixed projec- tively on the circumference of the rotor 49. Four pairs of conductive contact pieces 51 a, 52a; 51 b, 52b; 51 c, 52c; 51 d, 52d are fixed on the circumference of the stator 51 in the arrangement shown in FIG.3(b). The frictional conductive element 49b can move pressed against only a pair of them and the former can then short-circuit the latter. Therefore whenever the rotor 51 rotates by the angle of 90 degrees, a pair of them is short-circuited cyclically.

A broken lined square part 79 is a well-known electromagnetic plunger. The working element 53a of the electromagnetic plunger moves in the arrow 78 direction by absorption force of the exciting coil 39a energized. The lower portion of the hooked element 53 made of elastic material is fixed to the working element 53a and the upper portion 53b of the former is hook-shaped. When the working element 53a moves down in the arrow 78 direction, the upper portion 53b makes the rotor 49 rotate by 90 degrees in the arrow 77 direction by moving a pin 50a downward.

When the working element 53a moves back elastically by a spring force, the upper portion 53b of the hooked element hangs on the pin 50d. As explained above, every time the exciting coil 39a is energized for a short time, the rotor 49 rotates by 90 degrees and a pair of conductive contact pieces is short-circuited at the stopping position after rotating in turn.

The terminal 32a shown in FIG.1 is connected with the conductive contact pieces 51 a, 51 b, 51 c, 51 d. The terminal 32b shown in FIG.1 is connected with the conductive contact pieces 52a, 52c alternately and the terminal 32c shown in FIG.1 with the conductive contact pieces 52b, 52d alternately. Consequently, every time the exciting coil 39a is energized once, either of the terminals 32b, 32c of the switch 39 shown in FIG.1 is connected with the terminal 32a alternately, that is to say, the terminal 32a is connected with and energized by either of the plus terminals 35a, 35b alternately.

When a driver drives a vehicle on condition that the terminal 32a is connected with the terminal 32b, the loads 34 are energized via the terminals 32a, 32b by the plus terminal 35a. All of the loads 34 are then not necessarily energized but under energization control influenced by each electric switch connected with each load as occasion demands.

The electric switch 43b near the loads 34 in FIG.1 is closed, but some of them such as room lamps may be energized irrespective of the electric switch 43b. When a driver turns the engine key inserted again into the keyhole to the broken line 47c shown in FIG.3(a) after pulling it out, the electric switch 43b is closed. When he turns it to the broken line 47d shown in FIG.3(a) further, the electric switch 43a is closed.

Therefore, the loads 34 are energized. The exciting coils 39a, 41 b are energized, the terminal 32a is connected with the terminal 32c by automatic switching, the electric switch 43a is closed, the cell motor 41 is driven and the engine is started. The exciting coils 39a, 41 b are energized by both the plus terminals 35a, 35b of the battery through the diodes 37c, 37d respectively so that they may be energized without fail in case either voltage of the first and the second batteries drops.

As explained above, every time he starts the engine, either of the first and the second batteries is used for starting alternately under automatic control. After a traffic jam and very slow running with headlights lightened made the battery discharge excessively, after a driver left lights lightened during stopping, and after the capacity of the battery decreased resulting from its superannuation, the cell motor can not often start engine, which is called a battery enko in Japan.

This accident occurs frequently and forms about 50 percent of all car accidents. According to this invention, every time a driver drives the cell motor by turning the engine key, either of the first and the second batteries is used for starting alternately under automatic control.

While the vehicle is running, the small battery which energizes the loads is charged and excessive charge stops charging automatically.

From the above explanation, it is clarified that the engine can be started without fail by the cell motor because one of the first and the second batteries which is charged completely is selected to drive the cell motor automatically. This merit fulfills the purpose of this invention.

FIG.2 shows the other working example of the electric circuit.

A generator 72 driven by the engine is the same with the generator 72 shown in FIG.1 from the viewpoint of constitution.

Batteries 33 and a relay 74 for energizing a cell motor 41 are the same with those 33,74 shown in FIG.1 respectively from the viewpoint of constitution, so their actions are the same respectively.

A switching device 75 is different from the electromagnetic switch device 73 shown in FIG.1, so we explain it in detail below referring to FIG.4-(a),(b), (c). The switching device 75 consists of electric switches 43a, 43b and a two-way switch 39 and is set on the back side of the rotor 46 which rotates with the engine key inserted. Those switches are opened and closed manually by turning the engine key. The same numbers in FIG.4(a) and FIG.3(a) show the same material, the same constitution and the same action fundamentally.

But the angle between two broken lines 47c, 47d in FIG.4(a) is 90 degrees and is different from that in FIG.3(a), so the circular length of the crescent projection 46b in FIG.4(a) is longer than that in FIG.3(a) in correspondence to the angle and the distance from the electric switch 43b to the electric switch 43a in FIG.4(a) is also longer than that in FIG.3(a) in correspondence to the angle. The electric switch 43b is closed in the range of 90 degrees of also the rotor turning.

The same numbers in FIG.4(b) and FIG.3(b) show the same constitution, the same action and the same effect, so the explanations of the parts with those numbers shall be neglected. The different parts between them are the rotor 49 and the axle 44 of the stator 51.

The axle 44 is fixed to a portion of the car body on the back side of the rotor 46 being concentric with the rotor 46 shown in FIG.4(a). The axle 44 supports the rotor 49 so that the latter may rotate around the former freely keeping contact with it, and is fixed to the central part of the stator 51.

A one-way drive piece 56 which can come into contact with one of pins 50a, 50b, 50c, 50d erected on the rotor 49 shown in FIG.4(b) is set on the back side of the rotor 46 shown in FIG.4(a).

When the rotor rotates in the arrow 76 direction, one of the pins 50a, 50b, 50c, 50d comes into contact with the one-way drive piece 56 which is to make the rotor 49 rotate in the arrow 77 direction.

FIG.4(c) shows a horizontal section in view in the arrow 78 direction shown in FIG.4(b). The oblique lined portion 54 shows the back side portion of the rotor 46 and the oblique lined portion 55 shows the front side portion of the rotor 49. The one-way drive piece 56 is L-shaped as shown in FIG.4(c) and supported by the back side portion 54 via a pin 56a ( supported by a bearing not shown in FIG.4(c) on the portion 54 ) so as to be able to rotate within a certain angle.

The one-way drive piece 56 rotates counterclockwise in the arrow direction by a spring and its stopper portion 56b is pressed against the back surface 54 resulting in keeping it 56 vertical to the back surface 54. When the one-way drive piece 56 comes into contact with the pin 50b after moving right, the rotor 49 does not rotate obstructed by it 56.

But, when it 56 comes into contact with the pin 50c after moving left, it makes the rotor 49 rotate in the arrow 77 direction. The position of the one-way drive piece 56 is shown in FIG.4(b) and the position of the keyhole 46a in correspondence with this lies along the broken line 47a as shown in FIG.4(a).

When the driver turns the rotor 46 to the broken line 47c by turning the engine key, the one-way drive piece 56 comes into contact with the pin 50c. When he turns it further to the broken line 47d, the one-way drive piece 56 turns the rotor 49 by 90 degrees by pushing force the pin 50c. When he turns back the engine key to the broken line 47a, the one-way drive piece 56 returns to the initial position going over the pin 50b.

From the above explanation, it is clarified that when the engine key inserted into the keyhole 46a rotates to the broken line 47c, the electric switch 43b is closed. When it rotates further to the broken line 47d, the frictional conductive element 49b for short-circuiting rotates by 90 degrees in the arrow 77 direction resulting in short-circuiting the conductive contact pieces 51 b, 52b, and the electric switch 43a is then closed. When he lets go of the engine key, it turns back automatically by a spring force, the electric switch 43a is opened and the one-way drive piece 56 returns to the initial position.

The terminal 32a shown in FIG.2 is one connected with the conductive contact pieces 51 a, 51 b, 51c, 51 as in FIG.1. The terminal 32b is connected with the conductive contact pieces 52a, 52c and the terminal 32c with the conductive contact pieces 52b, 52d. Consequently, as in FIG.1, every time the driver turns the engine key to the broken line 47d for starting the engine, the terminal 32a is connected with either of the terminals 32b and 32c and either of the plus terminals 35a, 35b of the battery 33 energizes the loads 34 and the cell motor 41 alternately. Thus the purpose of this invention is fulfilled.

When in FIG.3(b) and FIG.4(b) two frictional conductive pieces 49b, 49c (shown in a broken line) are set symmetrically, electric current for energizing increases, so this arrangement is useful. In the above working example, four pairs of conductive pieces are set at intervals of 90 degrees, but n pairs of conductive contact pieces may be set at intervals of 360/n degrees. This arrangement also fulfills the purpose of this invention. As a matter of course, numbers of pins 50a, 50b, etc. and the angular intervals are changed corresponding with the arrangement. The well-known push-on and push-off mechanism with the working element 53a of the electromagnetic plunger 79 may be used for the mechanism shown in FIG.3(b), as a switching mechanism. This also fulfills the purpose of this invention.

It is more useful to add to this invention the device which detects the difference of the output terminal voltage of the first or the second battery for driving a cell motor from that before driving it and lights an alarm lamp or raise an alarm in case the detected voltage is larger than the set value. When these emergency signals are given several times, the exchange of the battery or the repair of the generator can remove the cause for the engine stop.

FIG.5 shows another working example of the electric circuit related to this invention. The generator 61 driven by the car engine is a well-known one. The plus terminal 61 a and the minus terminal 61 are necessary for electric output. A control device for making the generation voltage constant corresponding with the battery voltage is not shown in FIG.5.

The outside appearance of the battery 63 used for this example is the same with the conventional type, but it consists of two small batteries of equal capacity and equal voltage, for instance, 12 volts, and a case contains them. The minus terminal 66 is common, and the plus terminals 65a, 65b are independent.

As described later, in this invention, either of two small batteries is selected and energizes the loads, and they are charged independently via diodes 67a, 67b by the generator. The small battery on the plus terminal 65a side is named the first battery, and that on the plus terminal 65b side the second battery. They are charged by a well-known method as mentioned above, and when they are charged excessively, the electric current for charging decreases to the utmost. Any means which fulfills the said purpose other than this may be adopted.

An electromagnetic switch device 93 works when the exciting coil 69 of an electromagnetic plunger is energized. FIG.6 shows the structure of the electromagnetic switch device.

In FIG.6, the central portion of a rotary cam 82 with a ratchet 80 is penetrated by a shaft 80a with which they rotate synchronously. The shaft 80a is supported by bearings fixed to a portion of the car which is not illustrated.

The electromagnetic plunger 94 shown in FIG.6 may be well-known and includes an exciting coil 69 shown in FIG.5.

A rotatable lever 85 is supported rotatably by a pin 84a erected on the end portion of the movable bar 84 of the electromagnetic plunger 94. A pin 85a erected on an end portion of the rotatable lever 85 is in contact with a tooth of the ratchet 80 which has eight teeth at regular intervals around it.

The rotatable lever 85 is given a torque in the arrow 96 direction by a spring which is not illustrated. The rotary cam 82 is nearly square and its four projections are arranged at intervals of 90 degrees. An electric switch 89a is fixed to a portion of the car, and supports two conductive bars 86a, 86b to each end of which an electric contact is fixed. When the rotary cam 82 rotates, its projection 82b presses a conductive bar 86b laterally and the said electric contacts come into contact with each other. Thus a terminal 90a is connected to another 90b. When the rotary cam 82 rotates by 45 degrees further, the conductive bar 86b springs back and the electric contacts part from each other. Thus the terminal 90a is disconnected from the terminal 90b.

The constitutions of the electric switch 89b and the conductive bars 87a, 87b are quite the same with those of the corresponding parts 89a, 86a, 86b. In FIG.6, the terminal 91 a is disconnected from the terminal 91 b. When the rotatable cam 82 rotates clockwise from the position shown in FIG.6 by 45 degrees, its projection 82b pushes the conductive bar 87b laterally and the electric contacts come into contact with each other. Thus the terminal 91 a is connected with the terminal 91 b.

From the above explanation, it is clarified that every time the exciting coil 69 (shown in FIG.5) is energized once, the movable bar 84 and the rotatable lever 85 go back and forth once, turning the rotatable cam 80 by 45 degrees. Thus the terminal 88 is connected with either of the terminals 88a, 88b alternately. The device mentioned above is named the electromagnetic switch device.

The terminals 88, 88a, 88b shown in FIG.6 are the same with the terminals 88, 88a, 88b shown in FIG.5, so every time the exciting coil 69 shown in FIG.5 is energized, the terminal 88 of the magnetic switch device 93 is connected with either of the plus terminals 65a, 65b alternately.

If the electromagnetic plunger 94 is replaced by a rotary solenoid, the same purpose will be fulfilled. In this case, every time it is energized once, it rotates a working element by 45 degrees which rotates the rotary cam 82 with the ratchet 80. On the other hand, if a frictional rotary switch which rotates with the rotatable cam 80 synchronously is used as a substitute for the said electric switch 89a (89b), the same purpose will be fulfilled similarly.

Any switch device other than the said electromagnetic switch device may be used for this invention if only it fulfills the same purpose. For example, if the method of the alternation of the outputs of the plus terminals 65a, 65b of the battery 63 is the use of the alternation of the conduc- tions of two semi-conductive switching elements resulting from the alternation of the outputs of two output terminals, the same purpose will be fulfilled.

A broken lined square part 95 is a control switch device for controlling the energization of the cell motor 81. When the exciting coil 81 is energized, the electric switch 81 a is closed, the cell motor 81 is driven and the engine is started. The loads 64 show headlights, room lights, window opening-closing devices, etc.

When a driver turns the engine key inserted into the keyhole, the electric switch 83a shown in FIG.5 is closed at first and the loads 64 are energized. When he then turns it further, the electric switch 83b is closed and the exciting coils 69, 81 b are energized. Thus the cell motor is driven by being energized through either of the plus terminals 65a, 65b of the battery 63 and the engine is started. When he lets go of it, it turns back by a spring force, the electric switch 83b is opened automatically and the electric switch 83a is kept closed.

When he is driving the vehicle with the terminal 88a shown in FIG.5 connected with the terminal 88, the loads are energized via the terminals 88, 88a by the plus terminal 65a. The energization is then controlled automatically by each electric switch for each loads as occasion demands and the loads 64 are not necessarily energized to the fullest. Although the electric switch 83a is closed, some loads such as the room lamp are energized possibly by electricity which does not pass the electric switch 83a. When he turns the engine key inserted into the keyhole on the first stage after pulling it out for getting off, the electric switch 83a is closed. When he turns it on the second stage further, the electric switch 83b is closed.

The loads 64 are in energization mode then. The exciting coils 69, 81 b are energized, the terminal 88 is connected with the terminal 88b, the electric switch 81 a is closed, the cell motor 81 is driven and the engine is started.

The exciting coils 69, 81 are energized via both the diodes 62a, 62b by both the plus terminals 65a, 65b. When the voltage of either of the first and the second batteries drops by chance, the diodes 62a, 62b ensure the energization of the exciting coils 69, 81 b. As described above, every time the engine is started, the first and the second batteries alternate in energizing. The diode 98 stands against the back current of electricity and reduces the consumption of the first and the second batteries thereby.

In this invention, every time the driver drives the cell motor by turning the engine key, the first and the second battery alternate in energizing automatically. While the vehicle is running, the small battery which does not energize the loads is charged and excessive charge stops charging. The output voltage of the generator which charges the first and the second batteries via the diodes 67a, 67b is constant.

When charging finishes during running, the voltage rises rapidly, so either of the diodes 67a, 67b obstructs the charging current to the small battery which has finished charging. Thus excessive charging can be avoided. When either of the first and the second batteries selected energizes the loads 64, the diode 67a (67b) obstructs the energization by the other small battery, which ensures enough charging during running. Therefore the driver can start the engine after stopping without fail.

The action and the effect of this invention is to start the engine without fail as mentioned above.

A driver should not replace an attachment of his favorite car with another part generally from the viewpoint of safe drive, but the energization control system related to this invention is exceptional. The reason for this is as follows :
In FIG.5, the battery 63 is two split type, but its outside dimensions are the same with those of the conventional type, so it is easy and safe to replace the attachments of a car with this invention. The part 92 in FIG.5 is a new replacement of the car.

However it is necessary to modify wiring at three spots. They are the plus output terminal 61 a of the generator, the output terminal 88 of the electromagnetic switch device 93 and the right terminal of the exciting coil 69. Thus it is clarified that it is easy and safe to replace the attachment of a car with this invention.

It is more meritorious to add the following means to this invention.

When the electric switch 83a is closed after the engine key is turned for driving the cell motor, an electric circuit 97 energized through the terminal 83 is useful.

The electric circuit 97 detects the voltage difference between the first and second batteries, and lights a red alarm lamp or raise an alarm during a certain time in case the detected voltage exceeds the set point. After the above warnings are given several times, the driver may as well inspect the battery 63 and exchange it if necessary.

The driver can know the time when he should exchange the battery by the above means.

FIG.7 shows another working example about the electric circuit for this invention. The generator 111 is a well-known one for starting the engine of the car. The plus terminal 101 a and the minus terminal 101b of the generator 111 generate the output. The voltage control means for keeping the voltage constant corresponding to the battery voltage is not illustrated.

The outside dimensions of the battery 103 on board are the same with those of the conventional type, but it consists of two small batteries of equal capacity and equal output voltage, for example 12 volts, and is put in a box. The minus terminal 106 is common and the plus term inals 105a, 105b are independent.

As described later, in this invention, either of the two small batteries is selected automatically and energizes the loads. They are charged independently via the diodes 107a, 107b by the generator. The small battery on the plus terminal 105a side is named the first battery and the other one on the plus terminal 105b side the second battery. They are charged through a well-known means as mentioned above. In case of excessive charge, the diodes 107a, 107b function as the controller for reducing electric current for charging to the utmost. The other means can be adopted as this invention if only it fulfills the above purpose.

The electromagnetic switch device 132 works by the energization of the exciting coil 109 and is explained below in detail in reference to FIG.8, FIG.9, etc.

This working example is applied to a car, but the same device can be applied to any other vehicle driven by an internal combustion engine.

In FIG.8, two exciting coils 116a, 116b are wound around two cores 114a, 114b made of mild steel. Both the cores 114a, 114b are erected face to face in parallel on the symmetrical positions along the circumference of the bottom disk 112a. The inside surface of each core 114a (114b) is concave circularly and the arc length of each core width is 1/8 of the circumference of the bottom disk 112a. The cores 114a, 114b and the bottom disk 112a are made in a yoke body by press processing. A rotor 115 made of mild steel with a shaft bore at its center mounts a shaft 110 the lower end of which is supported by a bearing at the center of the bottom disk 112a.

A disc 112b which is a flat step pulley made of non-magnetic material such as plastic mounts the upper end of the shaft 110, and its smaller circumferential surface fits into the inside circular surfaces of the cores 114a, 114b. The shaft 110 is inserted into the bore 112c of the disk 112b via a bearing. The cross-section of the rotor 115 consists of two parallel straight lines on the two symmetrical sides and two circular lines on the other two symmetrical sides. A small gap between the circular line of the rotor 115 and the inside circular line of the core 114a (114b) is maintained.

The upper end of a helical spring 115a is fixed to the shaft 110 and its lower end to the projection 112d of the bottom disc 112a. The strain energy of the helical spring 115a gives a torque to rotate in the arrow 137 direction and the projection 115b of the rotor 115 comes into contact with the rear projection (not illustrated) of the disc 112b which obstructs the rotation of the rotor 115.

The exciting coils 116a, 116b are connected with each other in parallel or in series. When they are energized, the upper ends of the cores 114a, 114b are excited so as to become the N pole and the S pole respectively and the rotor 115 rotates by 45 degrees. When the energization is stopped, the rotor 115 rotates back by the reaction force of the spring 115a and stops at the initial position shown in FIG.8. Every time the exciting coils 116a, 116b are energized for a certain time, the shaft 110 rotates by 45 degrees together with the rotor 115 and rotates back to the initial position together with it 115.

FIG.9 and FIG.10 show an electric switch device which works by such a cycle of the rotation of the shaft 110.

In FIG.9, the boss 117b of a lever 117 is fixed to the top end of the shaft 110 which is supported via a bearing by a disc 112b illustrated by a broken line.

A ratchet 119 mounts the shaft 110 on the upper side of the lever 117 and the ratchet 119 and the lever 117 arranged concentrically are connected with the shaft 110 rotatably. A conventional stopper prevents the ratchet 119 from going out from the shaft 110.

The number of the teeth of the ratchet 119 is eight and they are arranged at regular intervals. The top end of the lever 117 is connected with a pin 117d rotatably with which an end of another lever 117a is also connected rotatably. A stopper pin 117c is erected on the other end of the lever 117a and in contact with a tooth of the ratchet 119. The lever 117a is given a torque by a spring (not illustrated) set on the pin 117d so as to rotate in the arrow 134 direction. An end of another lever 126 is connected with another pin 126a rotatably erected on the disk 112b and another stopper pin 126b erected on the other end the pin 126 is in contact with another tooth of the ratchet as shown in FIG.9.

The lever 126 is given a torque by a spring (not illustrated) set on the pin 126a so as to rotate counterclockwise.

In case the ratchet 119 is pressed against the upper surface of the disk 112b by a spring so as to rotate relatively against the friction torque generated between them, the lever 126 is not necessarily required. When the exciting coils 116a, 116b shown in FIG.8 are energized, the shaft 110 and the lever 117 shown in FIG.9 rotate by 45 degrees clockwise, so the ratchet 119 also rotates by 45 degrees. When the energization is stopped, only the lever 117 with the lever 117a and the stopper pin 117c rotates back by 45 degrees counterclockwise, and then the stopper pin 117c comes into contact with the next tooth of the ratchet 119 and prevents it from rotating.

On the upper face of the ratchet 119 made of plastic, four conductive plates 120a, 120b, 120c, 120d are stuck at intervals of 90 degrees as shown in dotted rectangle in FIG.10.

A pair of frictional bars 121a, 121 made of conductive elastic material are supported by a support 121 made of plastic set on the ratchet 119 and another pair of frictional bars 122a, 122b and its support 122 of the same constitution are set at the position 135 degrees distant from the support 121 on the ratchet 119.

The terminal 123a is connected with the frictional bars 121a, 122a and the terminals 123b, 123c with the frictional bars 121b, 122b respectively as shown in broken lines.

The devices shown in FIG.8, FIG.9 and FIG.10 are put in an airtight box which prevents oil particles and dust from entering. Both the supports 121, 122 shown in FIG.10 are fixed to the inside surface of the airtight box. From the above description, it is clarified that every time the exciting coils 116a, 116b shown in FIG.8 are energized once, the terminal 123a shown in FIG.10 is connected with either of the terminals 123b, 123c alternately, and these elements constitute an electromagnetic switch device.

The exciting coil 109 shown in FIG.7 corresponds with the exciting coils 116a, 116b shown in FIG.8, and the term inals 118, 118a, 118b shown in FIG.7 with the terminals 123a, 123b, 123c shown in FIG.10 respectively.

Therefore, every time the exciting coil 109 shown in FIG.7 is energized, the output current of the terminal 118 is sent from either of the plus terminals 105a, 105bal ternately.

A broken lined square part 133 shows an electric controller for controlling energizing current to the cell motor 111. When the exciting coil 111 b is energized, the electric switch 111 a is closed, the cell motor 111 is driven and the engine is started. The loads 104 shows ignitions of the engine, window opening devices, and so on.

When a driver turns the engine key inserted into the keyhole, the electric switch 113a shown in FIG.7 is closed at first and the loads are energized. When he turns it further on the next stage, the electric switch 113a is kept closed and the exciting coils 109, 111 are energized. As a result, the cell motor 111 is driven by the energization through either of the plus terminals 105a, 105b and the engine is started. When he lets go of the engine key, the engine key turns back automatically, the electric switch 113b is opened and the electric switch 113a is kept closed.

When he drives a car with the terminal 118a connected with the terminal 118 shown in FIG.7, the loads are energized via terminals 105a, 118a, 118 by the battery.

All loads 104 are not necessarily energized to the full then. Each electric switch for each load controls energizing current independently as occasion demands.

Although the electric switch 113a is closed, a certain loads are energized by electricity which does not pass it 113a. Headlights and room lamps are so. When he turns the engine key inserted into the keyhole on the first stage after pulling it out for getting off, the electric switch 113a is closed. When he turns it further on the second stage, the electric switch 113b is closed.

Thus the loads 104 are in the energization mode, so the exciting coils 109, 111 are energized, the terminal 118 is connected with the terminal 118b in the electromagnetic switch device 132, the electric switch 111 is closed, the cell motor 111 is driven and the engine is started. When both the plus terminals 105a,105b of the battery energize the exciting coils 109, 111 b, in case the voltage of the first or the second battery drops, the diodes 102a, 102b ensure the energization of the exciting coils 109, 111 b.

In this invention, every time the driver turns the engine key for driving the cell motor, the first and the second batteries alternate in energizing. While he is driving, the small battery which stops energizing is charged and the charging stops automatically after reaching full charge. The output voltage of the generator 101 is constant and it charges the first and the second batteries via diodes 107a, 107b. When the charging is finished during running, the voltage rises rapidly, so the corresponding diode 107a or 107b obstructs charging current. Thus excessive charging is avoided automatically.

When either of the first and the second batteries is selected for energizing the loads, the diode 107a or 107b on the side of the small battery which is not selected obstructs its energization. As a result, the battery is charged to the full during running, and he can start the engine without fail after pulling out the engine key.

When he keeps headlights lightened though he pulled out the engine key with the terminal 118 connected with the terminal 118a, the first battery consumes electricity and terminal voltage drops. At this time, electricity starting from the plus terminal 105b passes the diode 102a, the exciting coils 109, 111 b, the terminals 118,118a and reaches the plus terminal 105a. As a result, the first and the second batteries consume electricity and the purpose of this invention is not fulfilled. The diode 102c inserted in the position shown in FIG.7 obstructs the above needless energization.

But the following means makes the diode 102c useless.

The exciting coil 111 is connected with the exciting coil 109 in series or in parallel and they are energized through the diode 102a or 102b. The electric switch 113b is removed from the position shown in FIG.10 to the output side of the diodes 102a, 102b. According to this circuit, when the electric switch 113b is opened, the electric current to get through the diodes 102a, 102b is shut off, which makes the diode 102c useless. The action and the effect of this invention are to prevent the battery function from stopping when the engine is started.

Generally speaking, the driver should not remove and replace parts in the engine room of the car from the viewpoint of safe drive,but this invention is exceptional.

The reason for this is explained below in detail.

In FIG.7, the battery 103 is a two-split type one and its outside dimensions are the same with those of the conventional type, so it is easy to replace the latter with the former. The part 130 surrounded by a broken line in FIG.7 corresponds to one to be set newly in the car.

Spots where wiring modification is required are the plus output terminal 101 a of the generator 101, the output terminal 118 of the electromagnetic switch device 132 and the right terminal of the exciting coil 109 shown in FIG.10. Therefore the driver can replace the old parts with this invention easily and safely in his favorite car.

Thus the action and the effect of this invention is clarified.

The device shown in FIG.10 can be replaced with the device shown in FIG.11 because both purposes are the same.

The latter is explained below. The ratchet 119 shown in FIG.11 is the same with that shown in FIG.10. A square rotary cam 119a set concentrically over the ratchet 119 rotates synchronously with it 119. Conductive bars 124a, 124b are supported by a support 124 and other conductive bars 125a, 125b are supported by another support 125. Those conductive bars penetrate those supports.

The supports 124, 125 are made of plastic and are fixed to the inside surface of the airtight box as the supports 121, 122. In FIG.11, both the contacts of the conductive bars 124a, 124b are in contact with each other and those of the conductive bars 125a, 125b part from each other.

The former 124a, 124b are in conduction mode and the latter 125a, 125b in non-conduction mode.

Every time the exciting coils 116a, 116b shown in FIG.8 are energized, the rotary cam 119a rotates by 45 degrees and both the contacts of the conductive bars 124a, 124b and those of the conductive bars 125a, 125b come into contact with each other alternately by the pressing force of the projection of the rotary cam 119a, so the terminal 123a is connected with either of the terminals 123b, 123c alternately.

The terminals 123a, 123b, 123c shown in FIG.11 are the same with those 123a, 123b, 123c shown in FIG.10 and fulfill the same purpose as those 123a, 123b, 123c. The angle of one time rotation is 45 degrees as shown in FIG.13, but although it is 360/n degrees (where n is an even number more than 4), the same purpose as in FIG.11 can be fulfilled.

In this invention, the first and the second batteries of equal capacity are used, so in case of utilizing this matter, it is possible to detect the superannuation of the battery and to know the time when it should be replaced with a new one by an alarm. A comparison circuit compares the output voltage difference between the first and the second batteries with the set value and can give an alarm when the former exceeds the latter. The alarm device works only when the electric switch 113b shown in FIG.7 is closed to drive the cell motor. Such a comparison circuit with an alarm can make the driver know the time when he should replace the battery with the new one because the battery superannuation causes conspicuous voltage drop of the battery for driving the cell motor.

FIG.12 shows another working example of an electric circuit related to this invention. In FIG.12, loading material 201 shows all parts energized by the battery in a car, such as a generator, room lights, window opening devices, a cell motor, the relay for energizing it, manual key switches for their energization control and so on.

A terminal 201 a is used to be connected electrically with the plus terminal of the battery in the car, and the loading material 201 is energized therewith or the battery is charged by a generator in the loading material 201 therewith.

The minus terminal of the battery is connected with the car body.

The device mentioned above is a well-known one used in a car. This invention is also characterized by a part surrounded by a chain line in FIG.12 which is to be attached to the car without modifying the loading material 201, and produces another merit therewith besides the prevention of battery function stop in starting the engine.

The device shown in FIG.12 is explained below in detail.

The outside dimensions of the battery 203 are the same with those of the conventional type, but it consists of two small batteries of equal capacity and equal output voltage of 12 volts and is put in a box. The minus terminal 206 is common and the plus terminals 205a, 205b are independent.

As described later, in this invention, either of the small batteries is selected to energize the loads and they are charged via diodes 207a, 207b by a generator separately. The small battery on the plus terminal 205a is named the first battery and that on the plus terminal 205b the second battery. They are charged by the above well-known means. When they are charged to the full, the diodes 207a, 207b reduce the charging current to the utmost to obstruct excessive charging. The terminal 208 is connected by screwing with the terminal 201 a which is used to connect with the conventional battery in the car, so the battery 203 is charged by the generator in the loading material 201. An electromagnetic switch device 221 works when the exciting coil 209 in it is energized, and is explained below in detail. FIG.8, FIG.9, etc. are referred to thereat.

The electromagnetic switch device 221 is similar to that 132 shown in FIG.7, but different from it at the following points.

Every time the exciting coil 209 shown in FIG.12 is energized, the output currents from the plus terminals 205a, 205b of the battery alternate in passing the terminal 208, because the terminals 218a, 218b alternate in being connected with the terminal 218. The electromagnetic switch device shown in FIG.8 which can be used as that 221 shown in FIG.12 may be replaced with the other type one if only it fulfills the same purpose.

An exciting coil with which the shaft 110 is wound may be used for the exciting coils 116a, 116b shown in FIG.8 because it fulfills the same purpose. The shaft 110 is made of mild steel thereat.

A broken lined rectangular part 222 shows a relay for driving the cell motor. The relay 222 is included by the loading material 201 generally but is separated from it 201 here for the convenience of the explanation.

When the exciting coil 210a is energized, a electric switch (not illustrated) is closed to drive the cell motor. Thus the engine is started. The voltage of the plus terminal 211 is the same with that of the terminal 208 or 201 a.

When a driver turns the engine key to start the engine on the first stage, the loading material 201 begins to be energized. When he turns it further on the second stage, the electric switch 210 shown in FIG.12 is closed. When he lets go of it, it turns back automatically by a spring force and the electric switch 210 is opened. Thus the loading material 201 is energized continually. The terminal 209a is situated on the negative voltage side of the exciting coil 210a, so the exciting coil 209 is energized and the terminal 218 is connected with the terminal 218b. When he drives the car with such terminal connection, electricity which starts at the terminal 205a passes the terminals 208, 201 a and reaches the loading material 201. When he turns the engine key inserted into the keyhole from the first stage to the second stage after pulling it out for getting off, the electric switch 210 is closed. The exciting coils 209, 210a are energized, the terminal 218 is connected with the terminal 218b in the electromagnetic switch device 221, the relay 222 works by the energization of the exciting coil 210a, the electric switch (not illustrated) is closed, the cell motor is energized through the terminals 201a, 208, and then the engine is started.

The exciting coil 209 is energized through the plus terminals 205a, 205b of the battery 203, but in case the voltage of either of the first or the second battery drops, the correspondent diode 202a or 202b ensures the energization of the exciting coil 209.

According to this invention, every time he turns the engine key to drive the cell motor, the first and the second batteries alternate in energizing the loading material 201 automatically. While he is driving, the small battery which does not energize it is charged. When it has been charged to the full, the charging is stopped.

The output voltage of the generator is constant, and the first and the second batteries are charged through the diodes 207a, 207b respectively. When the charging has finished during running, the voltage rises rapidly, so either of the diodes 207a, 207b obstructs the charging current tothe correspondent small battery which has finished charging. Thus the excessive charging is avoided.

When either of the first and the second batteries is selected to energize the loading material 201, the diode 207a or 207b obstructs the energization by the small battery whichis not selected, so either small battery is charged to thefull. As a result, he can start the engine without fail after stopping the engine.

On condition that the terminal 218 is connected with the terminal 218a, when he pulled out the engine key inserted into the keyhole leaving the headlights lightened, it is feared that the terminal voltage drops by electricity consumption of the second battery which the output current from the terminal 205a induces but the diode 202a can prevent the output current of the second battery from reaching the terminal 205a after passing the diode 202b. Therefore it can be avoided that the first and the second batteries discharge at the same time.

The action and the effect of this invention are that this invention can obstruct the battery function stop at the time of starting the engine of the car as described above.

When the driver attach this invention to his favorite car, it is necessary to avoid removing the part and modifying the arrangement and the wiring from the viewpoint of safe drive. This invention can supply the efficient means to resolve such a problem, so the detail is explained below.

In FIG.12, the battery 203 is a two-split type one. Its outside dimensions are the same with those of the conventional one, so it is easy to replace the old one with this new one 203. A chain lined rectangular part 220 is the device which is to be attached newly to the car.

The method for attaching this invention to the car is as follow :

The first step is to replace the old one in the battery case with this new one 203 as mentioned above and to attach the said device 220 with the relevant wiring including the electromagnetic switch device 221 and excluding the battery 203 to a certain position in the engine room. It is desirable to select the outside surface of the battery case as the said certain position.

The next step is to connect the terminal 208 with the terminal 201 a by screwing. The last step is to solder the terminal 209a with the terminal on the minus voltage side of the exciting coil 210a (on the plus voltage side of the key switch 210) of the relay 222. It is understood clearly that the above method fulfills the purpose of this invention, and that it is one of merits of this invention to be able to attach it to the car without removing almost all parts of the car except the battery.

Thus the action and the effect of this invention are the easy attachment of this invention to the car and no obstruction to safe drive.

As the first and the second batteries of equal capacity are used in this invention, it is possible to detect the superannuation of the battery making use of this matter and to know the time of replacing the battery with the new one by an alarm. The device enabling it consists of a comparison circuit which compares the difference between both the output voltages of the first and the second batteries with the set value and an alarm which works when the former exceeds the latter on condition that the cell motor is driven after the electric switch 210 shown in FIG.12 is closed. As the voltage of the superannuated battery drops remarkably when it energizes the cell motor to drive it, it is possible to know the time of replacing the battery with the new one by attaching the above device.

FIG.13 is another working example with partial modification of that shown in FIG.12, and only different points between both the examples are explained below.

The electric switch 210 for starting the engine in the relay 222 shown in FIG.13, being different from that shown in FIG.15, is inserted on the plus voltage terminal 211 side. As soon as it 210 is closed for starting the engine, the exciting coil 210a is energized together with the exciting coil 209 as the transistor becomes conductive getting base electric current through the terminal 209a.

Therefore, its action and effect are the same with those in FIG.12.

FIG.14 shows an electric circuit related to a working example of this invention. A load 301 represents all loads which are energized by a battery loaded on a car such as a generator, room lights, window opening devices,a cell motor, a relay inserted on the energization way to the cell motor, a manual key switch for the energization control of them, etc.

A terminal 301 a is used for connecting the load 301 electrically with the plus terminal of the battery loaded on the car which energizes the above-mentioned load via this terminal 301 a after being charged by the generator.

The minus terminal of the battery is connected to the vehicle body.

The above-mentioned equipment is used in the car nowadays. One of the characteristics of this invention is the prevention of a battery enco called in Japan, a kind of car accident, and the other is the fulfillment of the remodelling purpose by only attaching the assembly which is surrounded by a chain line A shown in FIG.14 to the car without the modification of the loads of the car.

We explain this invention below in detail. The battery 303a represents the above-mentioned one with a plus terminal 305 and a minus terminal 306 witch is connected with the car body for earth. The terminal 301 a is connected with the plus terminal 305a by screwing.

But in this invention, the battery 303a is replaced by the assembly surrounded by a chain line shown in FIG.14 including a battery in a vehicle such as a car.

The capacity of the battery 303b may be different from that of the battery 303a, but it is ideal that the former is equal to the latter as is obvious from the reason explained about the action later.

The battery 303a and the battery 303b are named the main battery and the supplementary battery respectively.

The assembly which is surrounded by a chain line A shown in FIG.14 including the supplementary battery 303b is arranged at the position shown in FIG.14 as if it were a piece of element.

This assembly is loaded in the car and the terminal 301 a which is the input terminal of the electric loads is connected with the terminal 308 of the assembly by screwing. The input terminal 301 b is connected with the plus terminal 305a of the main battery 303a by screwing.

The terminals 306, 309a are connected with the car body for earth as shown by broken lines in FIG.14.

In this invention, either of the two batteries is selected to energize the load as described later. They are charged via diodes 307a, 307b by a generator separately.

They are charged by a well-known means as mentioned above. When they are charged to the full, the diodes 307a, 307b are destined to reduce the electric current for charging. Hereupon, As the terminal 308 is connected with the terminal 301 a by screwing which is prepared to be connected with them loaded in the car, they are charged by the generator included by the load 1.

The broken lined square part B shown in FIG.14 represents the electromagnetic switch device which works by the energized exciting coil 309. We explain it below in detail referring to FIG.15, FIG.16 and so on. This working example of the invention explained here is applied to the car, but the same means may be adopted for the other vehicle driven by an internal combustion engine.

In FIG.15, an electromagnetic plunger 312 is fixed to a flat base plate 311 made of plastic or the like and its working element 312a moves in the arrow D direction parallel to the base plate 311.

When the exciting coil in the electromagnetic plunger 312 is energized, the working element 312a moves by the set distance in the arrow D direction being absorbed by the electromagnetic force. When the energization is stopped, it moves back to the position shown in FIG.15 by a spring force.

The upper end of a leaf spring 311 a is fixed to the base plate 311 by bolting and its free end is inserted in the slit 312b of the working element 312a. Therefore, the working element 312 can move freely in the axial direction, but when it rotates, it is destined to rotate back by a spring force.

The central portion of a lever 313 is fixed to the top of the working element 312a. We explain it below in detail referring to FIG.16 which is a bird's-eye view.

The central portion of the lever 313 is fixed to the working element 312a and both the end portions have projections 313a, 313b formed by a press working.

The projections 313a, 313b tilt by the set angle in the working element 312a direction from the vertical surface of the lever body.

The lever 313 is kept to the base plate 311 receiving a spring back force of the leaf spring 311 a fixed to the base plate 311 as shown in FIG.15. When a torque is given to the lever 313, it rotates together with the working element 312a in the H direction or in the opposite direction. When the torque is removed, they rotate back to the initial position.

The projections 313a, 313b of the lever 313 make the broken lined device E shown in FIG.15 work. We explain it below in detail referring to FIG.17.

FIG.17 is the plan which is the arrow 300C direction view of FIG.15.

In FIG.17, the change lever 315 and the terminal plates 316, 316b constitute the broken lined device E shown in FIG.15 which occupies the space among the working element 312a, the lever 313 and the base plate 311.

FIG.18 is the arrow K direction view of the change lever 315 shown in FIG.17. We explain it below in detail referring to FIG.17 and FIG.18.

A short column 315a is fixed to the change lever 315 on which a supporting axle is erected. The supporting axle is born by the bearing of the base plate 311 which is the broken lined G portion in FIG.18 so that it may rotate freely. An end portion of a frictional element which is made of elastic material is fixed to an end portion of the change lever 315. In this working example, the change lever and the frictional element are made of conductive material.

The base plate 311 is made of plastic. Terminal plates 316, 316a, 316b which are made of conductive material are partially projecting from the surface of the base plate 311 and partially buried in it. The frictional element 317 is in contact with either of the terminal plates 316a, 316b. Its action is as follows.

When a pulse of electric current passes the exciting coil of the electromagnetic plunger 312 during a set time, the working element 312a moves left and then right. When it moves left, the projection 313b comes into contact with the lever 315, and the tilting surface of the former draws near the base plate 311 pushing the latter to turn it in the broken line F direction. At this time, the projection 313a moves away from the base plate 311, so it does not collide with the change lever 315.

The frictional element 317 comes into contact with the terminal plate 316b and becomes connected electrically with it. When the working element 312a moves back to the right, the rear surface of the tilting projection 313a comes into contact with the change lever 315. Thus the projection 313a moves up from the base plate to go over the change lever 315 and the lever 313 reaches the initial position shown in FIG.17.

When the next pulse of electric current passes the exciting coil of the electromagnetic plunger 312 during the set time hereupon, the working element 312a moves left again.

At this time, the projection 313a comes into contact with the change lever 315 at the broken line F position and rotates clockwise until it reaches the initial F position shown in FIG.17. At the same time, the frictional element 317 comes into contact with the terminal plate 316a and stops on it. And then the working element 312a and the lever 313 move back and stop at the initial position shown in FIG.17. The projections 313a, 313b move up or down making use of their tilting surfaces to avoid the collision with the change lever 315 as described above, so its detailed description is omitted.

The terminal 316 is connected with the change lever 315 through a spring as shown in FIG.17, so every time the electromagnetic plunger 312 is energized once, the terminal plates 316a, 316b alternates in being connected with the terminal plate 316, that is to say, it functions as an electromagnetic switch device.

As the energization is pulsating, the electric power consumption is less and the temperature does not rise.

They are the actions and the effects of this invention.

The use of the frictional element 317 makes the switch stand large electric current. It is a strong point of this invention.

The use of other terminal plates which are customary for a knife switch instead of the terminal plates 316a, 316b also make the switch stand large electric current. The leaf spring 317 shown in FIG.18 is not used here.

In FIG.19, when a pulse of electric current passes the electromagnetic plunger 312, the change lever 315 rotates to the position shown in FIG.19 and goes into the chink of the knife switch type terminal plate 319a to be seized by it. When another pulse passes the electromagnetic plunger 312, the change lever 315 rotates to the position F shown in FIG.19 and goes into the chink of the knife switch type terminal plate 319b to be seized by it.

As clarified by the above explanation, the terminals 314a, 314b alternate in being connected with the terminal 314 every time a pulse of electric current passes it. As this switch is of a knife switch type, it can be used for large electric current. It is an effect as well as an action of this invention.

The constitution of this switch in which the terminals can be switched for the energization of large electric current every time a pulse passes the electromagnetic plunger during the set time is simplified.

It is unnecessary in this switch to energize the exciting coil continuously during a working time as in a well-known type relay, so the temperature does not rise and the electric power consumption is reduced remarkably.

In FIG.14, the exciting coil 309 means that of the electromagnetic plunger 312 and the terminals 316 ,316a, 316b shown in FIG.17 correspond to the terminals 318, 318a, 318b respectively which constitute the electromagnetic switch device B shown in FIG.14.

Accordingly, every time the exciting coil 309 is energized in FIG.14, the output currents from the plus terminal 305a of the battery 303a and the plus terminal 305b of the battery 303b pass the terminals 308, 301 a alternately to energize the load 301.

Any means other than the above-mentioned electromagnetic switch device B can be adopted on condition that it can fulfill the same purpose.

When the car is driven in the mode of the connection of the terminal 318a with the terminal 318, the output current from the plus terminal 305a passes the terminals 308, 301 a to energize the load 1.

When the driver turns the engine key inserted into the keyhole after pulling it out to get off the car, the exciting coil in the relay for driving the cell motor is energized and the engine is started on condition that the engine key is turned on the first stage and then on the second stage.

When the battery 303a has been discharged to the utmost hereat for the above-mentioned reason, the cell motor can not be driven and the engine can not be started. When the driver pushes the push button switch at this time, the exciting coil 309 is energized by the output current passing the diodes 302a, 302b and the terminal 318 is connected with the terminal 318b.

As a result, the cell motor is energized by the battery 303b charged sufficiently while the car is running and the engine is started without fail. Thus the purpose of this invention is fulfilled. When the voltage of either of the batteries 303a, 303b for energizing the exciting coil 309 drops, the diodes 302a, 302b can assure the energization of the exciting coil 309.

If a push button switch 310 is set in front of the driver seat, it will be an effective means.

We explain the more effective means below.

The push button switch 310 shown in FIG.14 is removed and an electric switch 310a which is closed when an engine key inserted into the keyhole of the key switches is turned on the first stage and then on the second stage is used instead. When this electric switch 310a is closed, the exciting coil in the relay is energized to close the electric switch in it and the cell motor is energized to start the engine.

The above-mentioned device is well-known, but when the wiring is arranged as shown in a broken line in FIG.14, the electric switch 310a is closed and the exciting coil 309 is energized every time the driver goes into action for the cell motor drive.

Thus every time the driver goes into action for the engine start, the batteries 303a, 303b alternate in being used automatically.

When the battery has discharged extremely after the car continued stopping or running slowly with headlights light ened because of the traffic jam, when the driver is away from the car leaving headlights lightened for a long time or when the capacity of the battery has reduced because of its superannuation, a battery enco called in Japan which means the impossibility of the cell motor drive occurs though the driver goes into action for the engine start. The frequency of this accident occurrence is so high that it occupies about a half of the total occurrences of the car accidents.

According to this invention, every time the driver drives the cell motor after turning the engine key inserted into the keyhole, the batteries 303a ,303b alternate in being used automatically. While the car is running, the battery other than that selected for the energization is charged and the charging is stopped after it has been charged to the full. As described above, in case of the use of the push button switch, when the cell motor is not driven though the driver turns the engine key manually, the battery which has been charged to the full is selected to use through the electromagnetic switch device B connected with the push button switch 310 after he pushes it. Thus such a battery enco can be avoided.

The generator whose output voltage is constant charges the batteries 303a, 303b via the diodes 307a, 307b. When the charging is finished during the car running, the voltage rises rapidly, and the charging current to the battery 303a or 303b whose charging is finished is intercepted by the diode 307a or 307b.

Thus the excessive charging can be obstructed. In this case, when the load is energized by one of the batteries 303a, 303b selected, the energization current from the other which is not selected is intercepted by the diode 307a or 307b. Thus the charging during the car running is suf- ficent and he can start the engine without fail after stopping it. It is an action of this invention.

As clarified by the above-mentioned explanation, it is the battery which is charged to the full that drives the cell motor after he turns the engine key for starting during the car stopping. Thus the cell motor is driven without fail and the failure of the engine start can be obstructed. It is a strong point of this invention, that is to say, the purpose of this invention can be fulfilled by it.

When he leaves headlights lightened during the car stopping after pulling the engine key out of the keyhole the terminal 318 being connected with terminal 318a, the battery 303a continues to discharge from the terminal 305a. Thus the terminal voltage drops. At this time, the output current from the terminal 305b does not pass the terminal 305a via the diode 302b because the diode 302a intercepts the output current. Thus the discharges of both the batteries 303a, 303b can be avoided.

The driver need avoid removing the part or modifying the arrangement and the wiring when he attaches this invention to his favorite car from the viewpoint of the safe drive.

This invention gives him such an effective means that he need not do that. We explain its reason below in detail.

In FIG.14, the assembly surrounded by a chain line A is the part attached newly to the car.

The means for attaching this invention to the car is as follows.

As mentioned above, the assembly including the supplementary battery 303b which is surrounded by a chain line A is loaded on the car. Next, the terminal 308 is connected with the terminal 301 a and the terminal 301 b with the plus terminal 305a after the terminal 301 a is disconnected from the plus terminal 305a, and then the terminals 309a, 306 are connected with the car body for earth. In case of the use of the electric switch 310a, the broken lined wiring shown in FIG.14 is needed.

As clarified from the above-mentioned work for fulfilling the purpose of this invention, it is possible for the driver to attach this invention to the car in order to remodel it without removing and changing the other parts loaded on it. It is a strong point of this invention.

It is an effect as well as an action of this invention that the driver's attachment of this invention to his favorite car is simple and safe for drive.

We explained the action and the effect of this invention referring to the car, but this invention can be applied to the other vehicle using the cell motor for starting the internal combustion engine.

When the car is being parked at a hot place, especially in a sunny place, the room temperature of the car rises too high for the driver to concentrate his attention on driving it as the case may be.

In order to solve such a problem, some drivers buy and use an air conditioner with a small electric fan driven by a solar battery for preventing the room temperature from rising by introducing outdoor air through the fan during parking time, but this is expensive and unpopular.

This invention can solve the above-mentioned problem. We explain it below.

A small electric fan 320 is connected with the terminal 301 a via an electric switch 320a. When the electric switch 320a is closed during parking time, the electric fan 320 can introduce the outdoor air in the car room.

In case the driver can not drive the cell motor after a long time parking because of the discharge of either of the batteries 303a, 303b, this invention can solve such a problem by selecting the battery which has not discharged to the utmost for the energization of the cell motor.

Thus this invention can give him an effective means.

FIG.20 shows an electric circuit for another working example of this invention.

B shows a well-known type generator for driving a car engine.

The constitution of a plus terminal 301 a and a minus terminal 301 b causes the generator output. The control system of the generator output against the voltage fluctuation of the battery is not illustrated in FIG.20 though B includes it.

The outside dimensions of the battery 303 loaded on the car is the same with those of the conventional one, but it consists of two small batteries of equal output voltage of 12 volts and of equal capacity and is put in a case.

A minus terminal is common and two plus terminals are independent. The minus terminal is indicated by no.306 and the plus terminals by no.305a, and no.305b.

As described later, In this invention, either of the two small batteries is selected and energizes the load.

They are charged by the generator through diodes 307a, 307b independently. The small battery on the plus terminal 305a side is named the first battery and the one on the plus terminal 305b side the second battery here.

They are charged by the above-mentioned well-known means. When they are charged to the full, the diodes 307a,307b are destined to reduce the charging current.

Any other means which fulfills the above-mentioned purpose may be adopted.

The first and the second batteries may be loaded separately excluding a case to put them in because it can fulfill the purpose of this invention.

The broken lined device A shown in FIG.20 is an electromagnetic switch device comprising a two way switch 309 and an exciting coil 309a. A broken-lined device M is a well-known type relay for controlling the energization of a cell motor 319 shown by a broken lined circle. When a exciting coil 320 is energized, an electric switch 320a is closed, the cell motor 319 is driven and the engine is started.

The load 304 represents headlights, room lights, window opening devices and the other electric loads.

The driver turns the engine key inserted into the keyhole manually, the first electric switch 318b shown in FIG.20 is closed to energize the load 304 on the first stage. Another independent electric switch connected with the electric switch 318b in series controls the energization of the loads such as headlights and room lights.

When he turns the engine key further to go to the second stage, the electric switch 318a is closed as the electric switch 318b is kept closed. When the engine key turns back to the first stage position by a spring force, the electric switch 318a is opened but the electric switch 318b is kept closed.

When the electric switch 318a is closed, the exciting coils 309a, 309b are energized through diodes 307c, 307d and the two way switch 309 is switched.

The explanation of the common parts between this working example and the former one shown is FIG.14, FIG.15, etc. is omitted.

The exciting coil 309a shown in FIG.20 is used for the electromagnetic plunger 312. The terminals 316, 316a, 316b shown in FIG.17 correspond to the terminals 302a, 302b, 302c shown in FIG.20 which constitute the electromagnetic switch device A.

Therefore, every time the exciting coil 309a shown in FIG.20 is energized, the plus terminal 302a is connected with either of the plus terminal 305a of the first battery and the plus terminal 305b of the second battery alternately to energize the electric loads 304.

When the driver drives the car in the mode of the connection of the terminal 302b with the terminal 302a as shown in FIG.20, the output current from the plus terminal 305a passes terminal 302a and reaches the electric loads 304.

When he turns the engine key inserted into the keyhole to the first stage position and next to the second stage position after pulling it out to get off the car, an exciting coil 320 of a relay M for driving the cell motor is energized and the engine is started.

If the first battery has discharged up hereat for the above-mentioned reason, the cell motor will be unable to be driven resulting in an accident which prevents the engine from being started.

In this invention, the electric switch 318a shown in FIG.20 is closed accompanied with the action for the engine start. Thus the exciting coil 309a of the electromagnetic plunger 312 shown in FIG.15 is energized and the terminals 302b, 302c alternates in being connected with the terminal 302a.

When the driver drives the car in the mode of the connection of the terminal 302a with the terminal 302b as shown in FIG.20, the output current from the plus terminal 305a passes the load 304 through the terminals 302a, 302b.

At this time, all of the loads 304 are not necessarily energized and each load is put under the energization control by each electric switch as occasion demands.

Although the electric switch 318b is closed, some loads are energized by the current which does not pass the electric switch 318b. A clock is so. When he turns the engine key inserted into the keyhole to the first stage position after pulling it out for getting off the car, the electric switch 318b is closed. When he turns it further to the second stage position, the electric switch 318a is closed.

Thus the load 304 enters the energization mode, the exciting coils 309a, 320 are energized, the terminal 302a is connected with the terminal 302c in the two way switch 309, the electric switch 318a and the electric switch 320a of the relay M are closed, the cell motor is driven and the engine is started. Two diodes 307c, 307d are used for the positive energization of the exciting coils 309a, 320 by the plus terminals 305a, 305b in case the voltage of either of the first and the second batteries is drops.

As described above, every time the engine is started, the first and the second batteries alternate in being used for the energization automatically.

As clarified from the above-mentioned explanation, either of the first and the second batteries is selected automatically and used for driving the cell motor through turning the engine key during the car stopping on condition that it has been charged to the full, so the cell motor is driven without fail, which obstructs the failure of the engine start resulting in a strong point of this invention.

The addition of the following means to the invention shown in FIG.20 makes the point stronger.

What may as well be added is a sensor which detects the difference of the output voltage of the first battery from that of the second one during the cell motor drive. When the detected voltage is larger than the set value, an alarm lamp is lighted or an alarm sound is given. When this alarm is given a few times, the driver had better change the battery or repair the generator because he can obstruct the failure of the engine start by doing so.

FIG.19 as well as FIG.17 shows a practical constitution of a two way switch device using a change lever 315.

In FIG.19, the change lever 315 is made of copper. Two knife switches 319a, 319b are set on the base plate 311. In FIG.19, the change lever 315 is in contact with a knife switch 319a. When the former rotates to a broken lined position F, it comes into contact with the other knife switch 319b.

Thus every time the electric switch 318a shown in FIG.20 is closed, two terminals 314a, 314b alternate in being connected with a terminal 314, which can fulfill the purpose of this invention.

The constitution of the knife switch shown in FIG.22 makes the switching for large electric current more positive.

FIG.22 is the arrow P direction view referring to FIG.19. In FIG.22, two copper pieces 322a, 322b are fixed to a base plate 311 and two terminals 314a, 314b are connected with them 322a, 322b respectively.

A free end of the change lever 315 is pressed against the copper piece 322a by a leaf spring 321a. Two leaf springs 321a, 321 are of equal shape and their one ends are fixed to the base plate 311.

When the change lever 315 rotates to a broken lined position F shown in FIG.19, its free end is inserted into the space between a copper piece 322b and a leaf spring 321 b and pressed against the former by the latter.

The frictional pressed surfaces of the leaf springs 321 a, 321 b and the change lever 315 may as well be coated with teflon.

The copper pieces 322a, 322b are arranged so that the change lever 315 may touch them at the same time during the action of switching because otherwise they are possibly burnt by large electric current produced when either of the first and the second batteries has discharged up.

When the driver takes action in closing the electric switch 318a shown in FIG.20 to energize the cell motor his rapid manual operation for closing it for a short time or the like causes a trouble sometimes that the change lever 315 rotates only to the broken line R, not to the regular broken line F, resulting in the working element's (312a) rotating back by a spring force.

Under this condition, when the electric switch 318a is closed again and the working element 312a shown in FIG.17 moves left by an absorption force, a trouble that both the projections 313a, 313b of the lever 313 touch the change lever 315 at the same time obstructing its rotation occurs sometimes.

The means to solve the above-mentioned problem is as follows.

FIG.21 is the counter-arrow C direction view of the electromagnetic plunger 312 shown in FIG.15.

The hatched portion 311b shows a free end portion of a leaf spring which is inserted in the slit 312b. The slit 312b is not uniformly parallel to the longitudinal direction of the working element 312a but partially curved in its central region.

When the working element 312a moves left by an absorption force, it rotates in the arrow N direction by a set angle at the same time. When a torque is given it left or right after its movement has finished, it rotates left or right, but when the torque is removed, it rotates back by a spring force. In case of such a constitution, when the working element 312a moves left by an absorption force after the change lever 315 has rested at the broken line R shown in FIG.17, the projection 313a comes into contact with the change lever 315 while the projection 313b does not because it goes aside. Therefore the change lever 315 can rotate to the set position shown in FIG.17 for a switch action.

Thus the above-mentioned trouble can be removed. It is an action of this invention.

We explain actions of two transistors 308a, 308b and a condenser 310 shown in FIG.20 below.

When the electric switch 318a is closed, both terminals of the condenser 310 are of equal voltage and on a level of the earth, so the transistor 308b is kept non-conducting, but its voltage rises gradually as it is charged with its terminals put in the potential difference divided by resistances 310a, 310b, the transistor 308b becomes conductive after a certain time and then transistor 308a also does so. Thus, the exciting coil 320 is energized, the relay M is put in action, the electric switch 320a is closed, the cell motor is energized by either of the first and the second batteries which has been charged up through the electromagnetic switch device 309 during the car running and the engine is started.

Any relay M which is in common use in the car business world may be used here. In the above-mentioned retardation circuit, the retardation time is set so that the electric switch 320a may be closed after the electromagnetic switch device 309 has finished a switch action through the energization of the exciting coil 309a when the electromagnetic switch device 309 begins a switch action after the electric switch 320a is closed, large electric current passes of the cell motor is produced and is broken thereafter in some cases before the switch action has finished resulting in the burn of the electromagnetic switch 309 by sparks. In order to obstruct this, the above-mentioned retardation means is required. The other retardation means such as an oil damper may be used instead of the above-mentioned one.

We explain a working example shown in FIG.23 below, but limit the points which are different from that shown in FIG.20 to avoid the repetition of the explanation.

An electromagnetic switch device A comprises the exciting coil 309b as well as the exciting coil 309a.

In such an electromagnetic switch device A, a terminal plate 316 shown in FIG.17 corresponds to a terminal 302a shown in FIG.23 and two terminal plates 316a, 316b shown in FIG.17 correspond to two terminals 302b, 302c shown in FIG. 23 respectively.

In the switch action, a frictional working element 317 connects the terminal plate 316 with the terminal plate 316a or 316b, which means short-circuiting. If a potential difference between the first and the second batteries is produced by electric discharge thereat, large electric current will give them damages and lower their performances. When the frictional working element 317 disconnects the terminal plate 316 from the terminal plate 316a or 316b, sparks will burn them possibly. A purpose of this invention is to get an electromagnetic switch device which can remove the above-mentioned trouble.

We explain it below in detail.

FIG.24 shows an assembly of switching elements including a change lever 315 which is different from that shown in FIG.17.

In FIG.24, a roller 315c is supported at a lower end of a change lever 315.

A copper plate 319 with a terminal 314 is fixed to the base plate 311 shown in FIG.15 by bolts. Its upper portion 319a is curved by a press so that it may make a right angle with its lower portion.

Two movable copper plates 320a, 320b are rectangular and of equal shape. Their downward surfaces are kept parallel to the corresponding upward surfaces of the upper portion 319a of the copper plate 319 keeping air gaps between the corresponding pairs of them.

FIG.25 shows the supporting means of them in detail.

In FIG.25, the root end portions of the leaf springs 321 a, 321 b are fixed to the supports 322a, 322b which are fixed to the base plate 311 and the movable copper plates 320a, 320b are fixed to the free end portions of the leaf springs 321 a, 321 b by bolts so that they may be kept parallel to the corresponding upward surfaces of the upper portion 319a of the copper plate 319 with air gaps therebetween as shown in FIG.25. The leaf spring 321 b is shaped into the shape which is shown in FIG. 25 and FIG.26, and the leaf spring 321 a is done into the same shape with the leaf spring 321 b.

When the change lever 315 rotates back and forth between the position shown in FIG. 24 and that shown in a broken line F in FIG.24, the roller 315c presses the projecting central portions of the leaf spring 321a, 321 b and the movable copper plates 320a, 320b attached to them alternate in being pressed against the upper portions 319a of the copper plate 319 to enter the connection mode.

In FIG.24, the terminals connected with the movable copper plates 320a, 320b are shown accompanied with no.314a and no.314b respectively but the leaf springs 321 a, 321 b are not shown. In FIG.25, the leaf spring 321 a is pressed by the roller 315c and the movable copper plate 320a is pressed against the upper portion 319a of the copper plate 319. When the roller 315c moves right, it presses the leaf spring 321 b, so the movable copper plate 320b is pressed against the upper portion 319a of the copper plate 319.

The leaf spring 321 a returns up hereat by its own elasticity but a stopper may be set near it to prevent it from part from the upper portion 319a excessively.

As concerns such a constitution, the leaf spring 321 b is the same with the leaf spring 321 a.

FIG.26 is a plan which is the arrow N direction view of the movable copper plate 320b and the leaf spring 321 b shown in FIG.25. A bore 323c is used for fixing the leaf spring 321 b to a support 322b by a bolt. Bores 323a, 323b are used for fixing the movable copper plate 320b to the leaf spring 321 b by bolts.

Thus, every time a pulse of electricity passes the electromagnetic plunger 312 for a set time, the electromagnetic switch device A can go into the switch action for large electric current. Its constitution is simplified.

The exciting coil in it need not be energized continuously during the car running like a well-known type relay, so its temperature does not rise and the electric power consumption is remarkably low.

The terminals 314, 314a, 314b shown in FIG.24 correspond to the terminals 302a, 302b, 302c in the electromagnetic switch device A shown in FIG.23.

Therefore every time the exciting coils 309a, 309b shown in FIG.23 are energized, the plus terminal 305a of the first battery and the plus battery 305b of the second battery alternate in supplying the load 304 with the output current through the terminal 302a.

When the driver drives the car in the mode of the connection of the terminal 302a with the terminal 302b as shown in FIG.23, the plus terminal 305a supplies the load 304 with the output current.

When he turns the engine key inserted into the keyhole from the first stage to the second stage after pulling it out for getting off, the exciting coil 320 of the relay M for driving the cell motor is energized and the engine is started.

If the first battery has discharged to the utmost hereat for the above-mentioned reason, the cell motor will be unable to be driven resulting in an accident which prevents the car engine from starting.

In the case of this invention, when he takes action in starting the engine, the electric switch 318a shown in FIG.23 is closed, so the exciting coils 309a, 309b of the electromagnetic plunger 312 shown in FIG.15 are energized and the terminals 302b, 302c alternate in being connected with the terminal 302a.

When he drives the car in the mode of the connection of the terminal 302a with the terminal 302b, the plus terminal 305a supplies the loads 304 with the output current through the terminals 302a, 302b. All of the loads 304 are not necessarily energized hereat and the energization of each load is controlled by each electric switch as occasion demands.

Although the electric switch 318b is closed, a certain load is energized by the output current which does not pass it. A clock for example is so. When he turns the engine key inserted into the keyhole only for the first stage, the electric switch 318b is closed. When he turns it further for the second stage, the electric switch 318a is closed.

Thus the load 304 gets into the energization mode, that is to say, the exciting coils 309a, 309b, 320 are energized, the terminal 302a becomes connected with the terminal 302c in the electromagnetic switch device 309, the electric switch 320a in the relay M is closed, the cell motor is driven and the engine is started. The diodes 307c, 307d are used for securing the energization of the exciting coils 309a, 309b, 320 by the output current from the plus terminals 309a, 309b in case the voltage of either of the first and the second batteries drops.

As mentioned above, every time the engine is started, the first and the second batteries alternate in being used for the energization.

As clarified from the above-mentioned explanation, what drives the cell motor resulting from turning the engine key to start the engine after the car stop is one of the first and the second batteries which has been charged up, so the cell motor is driven without fail and the failure of the engine start can be obstructed, which is a strong point of this invention.

If the following means is attached to the circuit shown in FIG.23, the point will be stronger.

What is to be attached is a sensor which detects the difference between the output voltages of the first and the second batteries in driving the cell motor. When the detected voltage is higher than the set one, it makes an a larm lamp lighted or an alarm sound given. When this alarm is given several times, the change of the battery or the repair of the generator can obstruct an accident which makes the engine start unable.

In FIG.25, when the roller 315c moves left or right, the adjustment of the interval between the movable copper plates 320a, 320b can prevent them from being pressed against the upper portion 319a of the copper plate 319 at the same time.

Thus the plus terminals of the first and the second batteries are prevented from short-circuiting and their damage and superannuation can be obstructed, which are an effect as well as an action of this invention.

When the electric switch 318a shown in FIG.23 is closed, the exciting coils 309a, 309b, 320 are energized at the same time, but the switch action of the electromagnetic switch device 309 occurs after that of the electric switch 320a has done from the standpoint of constitution.

Accordingly after the cell motor has been energized, the terminal 302a is disconnected from the terminal 302b, so the accumulated magnetic energy of the cell motor 319 is changed into sparks produced between the terminals 302a, 302b, that is to say, between the movable copper plate 320a and the upper portion 319a of the copper plate 319 shown in FIG.24 which are damaged by them.

It is the exciting coil 309b shown in FIG.23 to remove the above-mentioned trouble. We explain its action below.

Both the exciting coil 309a, 309b wind round the magnet cores of the electromagnetic plunger 312. They assist the excitation action on the first stage, but when the electric switch 320 is closed, the energization is stopped. When the terminal 302a is disconnected from the terminal 302b, the accumulated magnetic energy discharges inside a closed circuit comprising the cell motor 319 and the exciting coils 309a, 309b without producing sparks.

The prevention of the spark production between the terminals 302a, 302b is an effect as well as an action of this invention.

The number of turn of the exciting coil 309b may as well be less than that of the exciting coil 309a because the above-mentioned discharge current inside the closed circuit can prevent the action of the electromagnetic plunger from stopping. The means for preventing the sparks from producing when the electric switch 320a is opened is out of question because it is comprised by the well-known type relay M.

We explain another working example of the electromagnetic switch device A below referring to FIG.27.

Rotary cams 324, 325 are fixed to a shaft 324a concentrically and rotate together with it. The shaft is supported by the bearing fixed to a case, not shown in FIG. 27, which is set in the car so that it may rotate freely.

A broken lined rectangular part C in FIG. 27 shows a well-known type electromagnetic plunger. The exciting coils in it correspond to those 309a, 309b shown in FIG.23.

A pin 326a is erected on an end portion of a working element 326 of the electromagnetic plunger C and a turning lever 327 is supported by the pin 326a so that it may turn freely. Another pin 327a is erected on the left end portion and is kept in contact with one of the teeth arranged around the rotary cam 324 as shown in FIG.27.

The teeth are eight in all and arranged at equal intervals. The turning lever 327 is given a moment in the arrow R direction by a spring which is not shown in FIG.27.

The rotary cam 325 is shaped in a shape resembling a circle as shown in FIG.27 and four projections 325a, 325b, 325c, 325d are arranged at equal intervals around it.

We explain below the action of the electric switch which is opened and closed by the projections 325a, 325b, 325c, 325d functioning as cams.

A switch device of the same constitution with that comprising a copper plate 319, 319a, and two movable copper plates 320a, 320b shown in FIG.25 is fixed to a base plate 311.

The copper plate 319 is fixed to the base plate 311 by bolts. Its upper portion 319a is curved making a right angle with its lower portion.

Terminals 314, 314a, 314b are connected with the copper plate 319 and the movable copper plates 328a, 328b respectively. FIG.28 shows the movable copper plates 328a, 328b in detail.

In FIG.28, the base portions of the leaf springs 329a, 329b are fixed to the supports 330a, 330b fixed to the base plate 311 by bolts 331a, 331 b. The movable copper plates 328a, 328b are fixed to the free end portions of the leaf springs 329a, 329b by bolts 332a, 332b. The leaf springs 329a, 329b are shaped in the shape shown in FIG.28.

A movable copper plate 328b is pressed by one 325a of the projections shown in FIG.27 and the movable copper plate 328b is pressed against the upper portion 319a of the copper plate 319 forming a connection mode.

When the electromagnetic plunger C shown in FIG.27 is energized, the working element 326 goes and returns once, so the pin 327a pushes a tooth and the rotary cams 324, 325 rotate by 45 degrees in the arrow P direction.

The projection 325a shown in a broken line in FIG.28 presses the leaf spring 329a hereat and the movable copper plate 328a is pressed against the upper portion 319a of the copper plate 319 forming another connection mode.

As clarified from the above-mentioned explanation, every time the electromagnetic plunger C is energized once, the movable copper plates 328a, 328b alternate in being pressed against the upper portion 319a of the copper plate 319.

When the movable copper plates 328a, 328b part from the upper portion 319a of the copper plate 319 by the spring forces of the leaf springs 329a, 329b, the air gaps between the movable copper plates and the copper plate need be equal and constant, so the shapes of the leaf springs 329a, 329b need the adjustment. Stoppers which prevent them from going apart excessively may be set near free end portions of the leaf spring 329a, 329b.

The electromagnetic plunger C may be replaced by a well-known type rotary solenoid which can fulfill the same purpose by rotating the rotary cams 324, 325 shown in FIG.27 by the set angle.

The exciting coils 309a, 309b shown in FIG.23 also shows those winding round the magnetic cores inside the electromagnetic plunger C shown in FIG. 27.

Therefore, every time the exciting coils 309a, 309b are energized once after the electric switch 318a shown in FIG.23 is closed, the working element 326 and the turning lever 327 go and return once and the rotary cam 325 rotates by 45 degrees.

Thus the terminals 314a, 314b alternate in being connected with the terminal 314. The above-mentioned device is named an electromagnetic switch device here.

The terminals 314, 314a, 314b correspond to the terminals 302a, 302b, 302c shown in FIG.23 respectively and their constitutions are same, so every time the exciting coils 309a, 309b are energized, the plus terminals 305a, 305b of the battery 303 alternate in supplying the load with the output current through the terminal 302a.

Short-circuiting the terminals 302b, 302c shown in FIG.23 prevents the battery from the damage and the copper plates 319a, 328a, 328b from burning caused by the accumulated magnetic energy of the cell motor 319 as in the prior working examples.

The other actions and effects are also the same with those of the prior working examples.

The teeth of the rotary cam 324 shown in FIG.27 may be 2n in all, but n is positive and integral number more than 1 from the standpoint of practicability. In this case, the number of the projections 325a, 325b,...of the rotary cam 325 must be n and it rotates by 360/2n degrees a cycle.

The distance angle between the movable copper plates 328a, 328b is also 360/2n degrees on condition that the standard point of angle is the center of the shaft 324a.

FIG.29 shows a working example of the electric circuit of this invention.

A generator 301 shown in a block which is driven by the engine of the car may be a well-known type one. The combination of a plus terminal 301 a and a minus one 301 b can produce the generator output. The control system of the generator output for the fluctuation of the battery voltage is included by the said block representing the generator 301 but the illustration for it is omitted.

The outside dimensions of the battery 303 loaded on the car are the same with those of the conventional type one.

It consists of two small batteries named the first battery and the second battery which are of equal output voltage of 12 volts and of nearly equal capacity and are put in a case. A plus terminal is common and two minus terminals are independent for them. The plus terminal is shown in no.306 and the minus terminals in no.305a and no.305b respectively.

As described later, in this invention, either of these two small batteries is selected to energize the load and is charged separately by the generator 301 through a diode 307a or 307b. A small battery on the minus terminal 305a side is named the first battery and that on the minus terminal 305b side the second battery. They are charged by the above-mentioned well-known means. When they have been charged to the full, the diodes 307a, 307b are destined to decrease the charging current extremely.

Any other means which can fulfill the same purpose may be adopted here. Although one of the first and the second batteries is set outside a battery case separately, the purpose of this invention can be fulfilled. By the aid of the diodes 307a, 307b, the generator can charge only either of the first and the second batteries which has discharged up. In case the output voltage of the first battery differs from that of the second battery, those diodes prevent them from charging and discharging resulting from the electric current's passing the terminals 306, 305a, 305b cyclically.

A broken lined part 300A shows an electromagnetic switch device comprising a two-way switch 309 and exciting coils 309a, 309b. A broken lined part 300M shows a well-known type relay for controlling the energization of a cell motor 319 shown in a broken lined circle. When the exciting coil 320 in it is energized, the electric switch 320a in it is closed to drive the cell motor 319 and then the engine is started. The loads 300D, 300E, 300F, 300G show headlights, room lights, window opening devices and the other electric loads.

When the driver turns the engine key inserted into the keyhole manually on the first stage, the first electric switch 318 in a manual electric switch 300B shown in FIG.29 is closed and the load 300D is energized.

When he turns it further to enter the second stage, the electric switch 318a becomes closed while the electric switch 318 is kept closed. When the engine key turns back to the first stage position by a spring force, the electric switch 318a is opened while the electric switch 318 is kept closed.

When the electric switch 318a is closed, the exciting coils 309a, 309b are energized via diodes 307c, 307d and the two-way switch 309 is switched.

The constitution of the two-way switch 309 may be similar to that explained related to prior figures such as FIG.15, so we explain only the different points below.

The load 300E shows headlights and the other lights.

The load 300F shows a room air conditioner. The load 300G shows a radio and the other electric fixtures.

The load 300D shows an ignition coil and the other electric fixtures necessary for starting the engine.

These loads are energized via the diodes 307c, 307d, so in case either of the first and the second batteries has discharged up, the engine can be started without fail.

When the exciting coil 320 is energized after the electromagnetic switch device 300A has finished its action through the use of a retardation circuit, no large electric current of the cell motor 319 passes the two-way switch 309 during its switch action so this means can exhibit the same action and the same effect as in the above-mention one.

We omit the explanation of the electromagnetic switch device 300A because it may be similar to that explained related to prior drawings such as FIG.27.

We also omit the explanation of the action of the electric switch opened and closed by the projections of a rotary cam because it may be similar to that shown in FIG.27 for example.

When there is a big electric potential difference between the first and the second battery and a circuit of short-circuiting between both the minus terminals 305a, 305b it causes a trouble. Diodes 309c, 309d inserted in the circuit can obstruct such a trouble.

We explain below another working example shown in FIG.30 which fulfills the same purpose with that shown in FIG.29.

Limiting the explanation to the different points between them, the exciting coil 309b shown in FIG.29 is replaced by a well-known type retardation circuit 320c comprising a condenser and a transistor.

Therefore, when the second electric switch 318a is closed, the exciting coil 309a is energized accompanied by the switch action of the two-way switch 309 and thereafter the exciting coil 320 is energized.

Thus this system can prevent the terminals 302a, 302b, 302c from burn by sparks because the switch action of the two-way switch 309 has finishes before large electric current of the cell motor passes them.

A diode 320b is inserted in a closed circuit comprising the minus terminals 305a, 305b of the first and the second batteries and the exciting coils 309a, 320. Therefore in case there is a potential difference between the minus terminals 305a, 305b, it can shut off the electric current between them and obstruct the wasteful discharge.

Generally speaking, the minus terminal 301 b of the generator 301 of the car and the minus terminals of the loads 300D, 300E, 300F, 300G and the cell motor 319 are connected with a portion 304a, 304b of the car body for earth.

Therefore the said portion 304a, 304b of the car short-circuits the minus terminals 305a, 305b of the first and the second batteries through the two-way switch 309.

For this reason, when there is a potential difference between the minus terminals 305a, 305b, it causes a trouble of discharge. In order to obstruct this trouble, the wiring of the minus terminal 301 b of the generator 301 above the broken line 304c shown in FIG.30 must be independent of the portion 304a of the car, that is, disconnected from it.

The above comments are applicable to the car body for earth 304a, 304b, 304c shown in FIG.29 as well as to it 304a, 304b, 304c shown in FIG.30.

The battery used for this invention is divided into the first battery and the second battery, so the number of the battery cell is two times more than that of the conventional type and the number of the inlet hole for electrolyte supply is also two times more than that of the conventional type.

FIG.31 shows a means for solving the above-mentioned problem.

In FIG.31, a battery without a cover is illustrated.

A battery case is shown in no.300W and divided into six cells by dividing plates 303a, 303b, 303c, 303d, 303e.

A plus terminal plate and a minus terminal-(hatched) plate in the upper half of each cell above a broken line 300H and the same pair in the lower half of each cell below the broken line 300H are arranged as shown in FIG.31.

The plus terminal plates are shown in no.308a, no.308b,... and the minus terminal plates in no.310a, no.310b,...respectively. The number of the terminal plate a cell may be more than that shown in FIG.31 actually.

Each plus terminal plate is connected with each minus terminal plate as shown in broken lines in the lower half as well as in the upper half of the cell.

The potential difference between the plus terminal 306 and the minus terminal 305b is 12 volts. The number of the plus terminal is one, so it is a common terminal.

On the other hand, the minus terminals 305a, 305b are independent.

Therefore this battery can be used as the battery 303 for this invention.

A battery with a common minus terminal and two independent plus terminals can also be used for the same purpose with this invention.

As clarified from the above-mentioned explanation, the number of the cell is six just like the conventional type, so the number of the inlet hole for electrolyte is also six, which can supply us with an effective means.

The present invention can be applied to all vehicles including cars,ships,cultivators and so on drived by internal combustion engine. Furthermore the present invention can be applied even if the capacity of the first battery is different from that of the second and the plus and minus terminal of the batteries are exchanged.

## Claims

1. A control system for the load energization by the battery characterized by consisting of :
the first and the second batteries with a common first polarity terminal and two independent second polarity terminals loaded on a vehicle driven by an internal combustion engine,
a generator driven by the said internal combustion engine for charging the said first and the said second batteries through the diodes connected with the first or second polarity terminal of the said first and the said second batteries respectively,
an electric switch device including the first electric switch which is kept closed when the engine key for starting the said internal combustion engine inserted into the keyhole is turned by a certain angle on the first and the second turning stages, the second electric switch which is kept closed when the said engine key is turned by a certain angle on the final turning stage, and a spring back means which makes the said engine key turn back to the initial position when the force for turning it is removed,
an electromagnetic switch device including the first terminal, the second terminal connected with the first or second polarity terminal, and the third terminal connected with the first or second polarity terminal, the said second and the said third terminal alternating in being connected with the said first terminal every time an exciting coil in it is energized once,
the first electric circuit for starting the said internal combustion engine by energizing the cell motor through the said first terminal, the relay for driving the said cell motor, and the exciting coil of the said electromagnetic switch device through the diode connected with the said first or second polarity terminal after the said second electric switch is closed, and
the second electric circuit for energizing the electric loads loaded on the said vehicle through the said first terminal regardless of the energizing current's passing the said first electric switch.

2. A control system for the load energization by the battery characterized by consisting of:
the first and the second batteries with a common first polarity terminal and two independent second polarity terminal loaded on a vehicle driven by an internal combustion engine,
a generator driven by the said internal combustion engine for charging the said first and the said second batteries through the diodes connected with the first or second polarity terminal of the said first and the said second batteries respectively,
an electric switch device including the first electric switch which is kept closed when the engine key for starting the said internal combustion engine inserted into the keyhole is turned by a certain angle on the first and the second turning stages, the second electric switch which is kept closed when the said engine key is turned by a certain angle on the final turning stage, and a spring back means which makes the said engine key turn back to the initial position when the force for turning it is removed,
the first rotor which rotates synchronously with the said engine key,
the second rotor set concentrically with the said first rotor and turning only in one direction by 360/n degrees ( n = 2, 4, 6,.... ) namely by the difference between the said first stage turning angle and the said second stage one driven by a one-way drive piece every time the said first rotor turns and turns back once,
frictional conductive pieces set on the circumferential surface of the said second rotor for short-circuiting,
a stator set concentrically with the said second rotor,
n/2 pairs of conductive contact pieces short-circuited by the said frictional conductive pieces and set at intervals of 360/n degrees on the circumferential surface of the said stator,
the first terminal drawn out from one of each pairs of the said conductive contact pieces,
the second terminal drawn out from one of odd-numbered pairs of the said conductive contact pieces,
the third terminal drawn out from one of even-numbered pairs of the said conductive contact pieces,
the first electric circuit for starting the said internal combustion engine by energizing the cell motor through the said first terminal after closing the said second electric switch through the connection of the said second and the said third terminals with the said first or second polarity terminal respectively and through the connection of the said first terminal with the relay for driving the cell motor via the said second electric switch,
and
the second electric circuit for energizing the electric loads loaded on the said vehicle through the said first terminal regardless of the energizing current's passing the said first electric switch.

3. A control system for the load energization by the battery characterized by consisting of:
the first and the second batteries with a common first polarity terminal and two independent second polarity terminals loaded on a vehicle driven by an international combustion engine,
a generator driven by the said internal combustion engine for charging the said first and the said second batteries through the diodes connected with the first or second polarity terminal of the said first and the said second batteries,
a manual electric switch device for opening and closing the energization switch for the cell motor used to start the said internal combustion engine,
an electromagnetic switch device including the first terminal, the second terminal connected with the first or second polarity terminal, and the third terminal connected with the first or second polarity terminal, the said second and the said third terminal alternating in being connected with the said first terminal every time an exciting coil in it is energized once,
the first electric circuit for starting the said internal combustion engine by energizing the said cell motor through the said first terminal after closing the switch for energizing the relay for driving the said cell motor through the energization of the said relay and through the energization of the said exciting coil via the third and the fourth diodes connected with the said first or second polarity terminal respectively by closing the switch for energizing the said cell motor,
and
the second electric circuit for energizing the electric loads of the said internal combustion engine through the said first terminal.

4. A control system for the load energization by the battery characterized by consisting of:
the first and the second batteries loaded on a vehicle driven by an internal combustion engine with a common first polarity terminal and two independent second polarity terminals,
a generator driven by the said internal combustion engine for charging the said first and the said second batteries through the first and the second diodes connected with the first or second polarity terminal of the said first and the said second batteries,
an electric switch device opened and closed manually,
a _{D} shaped yoke with the exciting coils around two cores of it fixed to the said vehicle,
a non-magnetic disk striding over and fixed rigidly to the magnetic opening ends of two cores of the said :J shaped yoke whose inward surface diameter coincides with the appointed distance between the said magnetic opening ends,
a shaft whose both ends are supported rotatably by the bearings set at the central portions of the bottom disk of the said shaped yoke and the said non-magnetic disk,
a magnetic rotor whose central portion is fixed to the said shaft and whose both end breadth is the same with that of the core of the said :J shaped yoke, keeping a small gap against the inward surface of the magnetic opening end of the said :J shaped yoke,
a spring set on the said magnetic rotor or the said shaft so that the said magnetic rotor may turn back to the initial position by stopping the energization of the said exciting coil after it turns by a certain angle being absorbed by N, S magnetic poles of the said magnetic opening ends accompanied by the energization of the said exciting coil,
a rotatable disk which turns by 360/n degrees (n is plural number more than 2) every time the said rotor turns and turns back,
an electromagnetic switch device with the first terminal, the second terminal connected with the first or second polarity terminal, and the third terminal connected with the first or second polarity terminal, functioning so that the said second and the said third terminals may alternate in being connected with the first terminal by one time turning of the said rotatable disk every time the said exciting coil is energized once,
the first electric circuit for starting the said internal combustion engine by energizing the said exciting coil through the third and the fourth diodes connected with the first or second polarity terminal accompanied by the manual closing of the said electric switch device and simultaneously by closing the electric switch of the said relay through the energization of it for driving the cell motor,
and
the second electric circuit for energizing the electric loads of the said vehicle through the first terminal.

5. A control system for the load energization by the battery characterized by consisting of:
the first and the second batteries loaded on a vehicle driven by an internal combustion engine with a common first polarity terminal and two independent second polarity terminal,
the first and the second diodes (207a, 207b) connected with the said first and the said second batteries respectively in the charging direction,
the first terminal (208) connected with the input sides of the said first and the said second diodes,
an electromagnetic switch device by which the said first plus terminal (205a) and the said second plus terminal (205b) alternate in being connected with the said first terminal (208) every time the exciting coil in it is energized once through the said third and the said fourth diodes (202a, 202b) by the said first and the said second plus terminals (205a, 205b),
a conventional device and a conventional electric input terminal 201 a used for it including loads loaded on the said vehicle and a manual key switch for necessary energization control of devices such as the relay used for the energization control of the said cell motor,
an electric circuit used for energizing the exciting coil by closing the electric switch for driving the said cell motor through the operation of the said manual key switch, and for stopping the energization of the said exciting coil by opening the said electric switch through the return operation of the said manual key switch,
and
a means for connecting the said first terminal (208) with the said electric input terminal (201 a) or for canceling the connection.

6. A control system of the load energization by batteries characterized by consisting of :
a main battery which energizes the electric load and a supplementary battery which fulfills the same purpose, loaded on a vehicle which runs driven by an internal combustion engine,
the first and the second diodes whose output sides are connected with the plus terminals of the said main battery and the said supplementary battery respectively so that a generator loaded on the car may supply those batteries with the electric current for charge,
a terminal(308) connected with the input sides of the said first and the said second diodes,
an electromagnetic switch device which makes the plus terminal of the said main battery (305a) (hereinafter called " the first plus terminal") and that of the said supplementary battery (305b) (hereinafter called " the second plus terminal") alternate in being connected electrically with the said terminal (308) every time a pulse of the output current of the said first or the said second plus terminals selected by an electric switch passes an exciting coil in it through the third or the fourth diode respectively during a set time,
a means for disconnecting the input terminal of the electric load from the said first plus terminal(305a) of the said main battery and for connecting the said input terminal with the said terminal(308),
a means for connecting the output side of the said first diode and the input side of the said third diode with the said first plus terminal(305a) and connecting the output side of the said second diode and the input side of the said fourth diode with the said second plus terminal (305b), and
a means for connecting the minus terminal of the said supplementary battery with a portion of the said vehicle for earth.

7. A control system of the load energization by batteri es characterized by consisting of :
the first and the second batteries with a common terminal of a polarity and two independent terminals of the opposite polarity constituting the first polarity terminal and the second polarity terminal respectively which are loaded on a vehicle driven by an internal combustion engine,
a generator driven by the said internal combustion engine loaded on the said vehicle for charging the said first and the said second batteries through the first and the second diodes connected with the said first and the said second polarity terminals respectively,
an electric switch device used for a process in which turning an engine key inserted into a keyhole by the first set angle on the first stage makes the first electric switch closed, turning it further by the second set angle on the second stage keeps the said first electric switch closed, turning it further again by the third set angle on the third stage makes the second electric switch closed, and removing the force for turning it on the last stage makes it turn back by a spring force to the said first or the said second set angle,
an electromagnetic plunger fixed to a base plate,
a working element which moves forth by a set stroke in parallel with the said base plate through the energization of an exciting coil of the said electromagnetic plunger and back to the initial position by a spring force through shutting off the said energization,
a lever whose central portion is fixed perpendicular to an end portion of the said working element,
the first and the second projections which are projecting toward the said base plate surface from both end portions of the said lever and tilting in the absorption direction of the said working element,
a device used for a process in which the said lever and the said working element are made rotate in the right or the reverse direction only corresponding to a torque given in the right or the reverse direction and rotate back to the initial position when the said torque is removed on condition that the former kept in parallel to the said base plate rotates by a set angle while the latter moves by a set stroke by an absorption force,
a change lever made of conductive material and supported by an axle perpendicular to the said base plate at its intermediate portion so as to turn freely between the said base plate and the said working element consisting of the first lever on one side of the said axle and the second lever on the opposite side,
a device used for a process in which the movement of the said lever together with the said working element in the absorption direction through a pulse current energization of the said exciting coil on the first stage makes the third contact of the said first lever kept frictionally on the first contact fixed on the said base plate after the turn of the said change lever by a set angle through coming into contact with the said first projection of the said lever and then the next movement of the said lever together with the working element in the absorption direction through a next pulse current energization of the said exciting coil after their backward movement by a spring force on the second stage makes the said third contact kept frictionally on the second contact fixed on the said base plate after the turn of the said change lever by the set angle through coming into contact with the said second projection of the said lever,
the first and the second terminals connected with the said first and the said second contacts respectively,
the third terminal connected with the said third contact,
the first electric circuit used for a process in which closing the said second electric switch makes the said exciting coil of the said electromagnetic plunger and an exciting coil of a relay for energizing a cell motor energized through the third and the fourth diodes connected with the said first polarity terminal of the said first battery and the said second polarity terminal of the said second battery respectively,
the second electric circuit in which the said first and the said second terminals are connected with the said first polarity terminal of the said first battery and the said second polarity terminal of the said second battery respectively, and
the third electric circuit used for a process in which closing the electric switch in the said relay through the output current of the said third terminal makes the said cell motor energized, the engine started and the electric loads energized.

8. A control system of the load energization by batteries characterized by consisting of :
the first and the second batteries with a common terminal of a polarity and two independent terminals of the opposite polarity constituting the first and the second polarity terminals corresponding to the said first and the said second batteries respectively which is loaded on a vehicle driven by an internal combustion engine,
a generator driven by the said engine loaded on the said vehicle which is used for charging the said first and the said second batteries through the first and the second diodes connected with the said first and the said second polarity terminals respectively,
an electric switch device used for a process in which turning an engine key inserted into a keyhole by the first set angle on the first stage makes the first electric switch closed, turning it further by the second set angle on the second stage keeps the said first electric switch closed, turning it further again by the third set angle on the third stage makes the second electric switch closed, and removing the force for turning it on the last stage makes it turn back by a spring force to the said first or the said second set angle,
an electromagnetic switch device which makes the said first polarity terminal of the said first battery and the said second polarity terminal of the said second battery alternate in energizing the load through the energization of an exciting coil in it via the third and the fourth diodes connected with the said first and the second polarity terminals respectively every time the said second electric switch is closed once,
a device which retards closing an electric switch in a relay for energizing a cell motor by a set time when an exciting coil in the said relay is energized through the closing of the said second electric switch, and
an electric circuit used for a process in which the output current of the said electromagnetic switch device energizes the said cell motor to start the said engine and the electric loads through the closing of the said electric switch in the said relay.

9. A control system of the load energization by batteries characterized by consisting of :
the first and the second batteries with a common terminal of a polarity and two independent terminals of the opposite polarity constituting the first polarity terminal and the second polarity terminal loaded on a vehicle driven by an internal combustion engine,
a generator driven by the said engine loaded on the said vehicle for charging the said first and the said second batteries through the said first and the said second polarity terminals,
an electric switch device used for a process in which turning an engine key inserted into a keyhole by a set angle on the first stage makes the first electric switch closed, turning it further by the second set angle on the second stage keeps the said first electric switch closed, turning it further again by the third set angle on the third stage makes the second electric switch closed, and removing the force for turning it on the last stage makes it turn back by a spring force to the said first or the said second set angle,
an electromagnetic switch device which makes the said first polarity terminal of the said first battery and the said second polarity terminal of the said second battery alternate in energizing the load through the energization of the first and the second exciting coils winding round the same magnetic core in it via the first and the second diodes connected with the said first and the said second polarity terminals respectively every time the said second electric switch is closed once,
the first electric circuit used for a process in which the output current of the said electromagnetic switch device energizes a cell motor to start the said engine through an electric switch in a relay for energizing the said cell motor closed by the energization of the third exciting coil in the said relay resulting from the closing of the said second electric switch,
the second electric circuit used for a process in which the output current of the said first and the said second polarity terminals of the said first and the said second batteries energizes the said first and the said second exciting coils and the series connection body of the said cell motor through the closing of the said second electric switch, and
the third electric circuit used for the energization of the electric loads by the output current of the said electromagnetic switch device.

10. A control system of the load energization by batteries characterized by consisting of :
the first and the second batteries with a common terminal of a polarity and two independent terminals of the opposite polarity constituting the first and the second polarity terminals respectively loaded on a vehicle driven by an internal combustion engine,
a generator driven by the said engine loaded on the said vehicle which charges the said first and the said second batteries through the said first and second polarity terminals respectively,
an electric switch device used for a process in which turning an engine key inserted into a keyhole by the first set angle on the first stage makes the first electric switch closed, turning it further by the second set angle on the second stage keeps the said first electric switch closed, turning it further again by the third set angle on the third stage makes the second electric switch closed, and removing the force for turning it on the last stage makes it turn back by a spring force to the said first or the said second set angle,
an electromagnetic plunger fixed to a base plate,
a working element moving in parallel with the said base plate by a set stroke absorbed by the said electromagnetic plunger through the energization of an exciting coil in it and moving back by a spring force when the energization is shut off,
a lever whose central portion is fixed on an end portion of the said working element so as to be perpendicular to it,
the first and the second projections projecting toward the said base plate surface from both the ends of the said lever and tilting in the absorption movement direction of the said working element,
a device which makes the said lever turn in the right or the reverse direction from the initial position to the said base plate only corresponding to a torque given in the right or the reverse direction respectively and turn back to the said initial position through the removal of the torque,
a change lever supported by an axle perpendicular to the said base plate at its intermediate portion so as to turn freely between the said base plate and the said working element constituting the first lever and the second lever extending on both sides of the said axle respectively,
a device used for a process in which the movement of the said lever together with the said working element in the absorption direction through a pulse current energization of the said exciting coil makes the said change lever turn by a set angle through the first said projection coming into contact with the said first lever and then the next movement of the said lever together with the said working element in the absorption direction through the next pulse current energization of the said exciting coil after the backward movement of the said working element by a spring force makes the said change lever turn in the reverse direction by the set angle through the said second projection coming into contact with the said second lever followed by the next backward movement of the said working element by a spring force,
the first copper plate fixed to the said base plate,
the first and the second leaf springs whose end portions are fixed to the said base plate,
the second and the third copper plates fixed to the other end portions of the said first and the said second leaf springs respectively and arranged on both sides of the said first copper plate leaving spaces therebetween in parallel to it respectively,
a device which makes the said second or the said third copper plate come into contact with the said first copper plate for electric conduction through the press of the said first or the said second leaf spring by the end portion of the said change lever corresponding to its left or right turn,
the first, the second and the third terminals connected with the said first, the said second and the said third copper plates respectively,
the first electric circuit used for a process in which the closing of the said second electric switch makes the said exciting coil in the said electromagnetic plunger and an exciting coil in a relay for energizing a cell motor energized through the second and the third diodes connected with the said first polarity terminal of the said first battery and the said second polarity terminal of the said second battery respectively through the closing of the said second electric switch,
the second electric circuit in which the said first and the said second terminals are connected with the said first polarity terminal of the said first battery and the said second polarity terminal of the said second battery respectively, and
the third electric circuit used for a process in which the said third terminal supplies the said cell motor for starting the said engine and the electric loads with the output current through the closing of an electric switch in the said relay.

11. A control system of the load energization by batteries characterized by consisting of :
the first and the second batteries with a common terminal of a polarity and two independent terminals of the opposite polarity constituting the first and the second polarity terminals which are loaded on a vehicle driven by an internal combustion engine,
a generator driven by the said engine loaded on the said vehicle for charging the said first and the said second batteries through the said first and the said second polarity terminals respectively,
an electric switch device used for a process in which turning an engine key inserted into a keyhole by the first set angle on the first stage makes the first electric switch closed, turning it further by the second set angle on the second stage keeps the said first electric switch closed, turning it further again by the third set angle on the third stage makes the second electric switch closed, and removing the force for turning it on the last stage makes it turn back to the first or the second set angle by a spring force,
a rotary cam similar to a disk which rotates in one direction by 360/2n degrees (where n is equal to a positive integral number more than 1) every time an exciting coil of an electromagnetic plunger or a rotary solenoid is energized once,
n projections projecting at equal intervals along the circumference of the said rotary cam,
the first copper plate fixed to a base plate and the first and the second leaf springs whose end portions are fixed to the said base plate,
the second and the third copper plates fixed to the other end portions of the said first and the said second leaf springs and arranged on both sides of the said first copper plate in parallel to it leaving spaces therebetween,
a device used for a process in which the said projections along the circumference of the said rotary cam press the said first and the said second leaf springs alternately according to its rotation and make the said second and the said third copper plates come into contact with the said first copper plate for electric conduction alternately thereby,
the first, the second and the third terminals connected with the said first, the said second and the said third copper plates respectively,
the first electric circuit used for a process in which the said exciting coil of the said electromagnetic plunger or the said rotary solenoid is energized through the first and the second diodes connected with the said first polarity terminal of the said first battery and the said second polarity terminal of the said second battery respectively and an exciting coil in a relay for energizing a cell motor is also energized after the closing of the said second electric switch,
the second electric circuit in which the said first and the said second terminals are connected with the said first polarity terminal of the said first battery and the said second polarity terminal of the said second battery respectively, and
the third electric circuit used for a process in which the said third terminal supplies the said cell motor for starting the said engine and the electric loads with the output current through the closing of an electric switch in the said relay.

12. A control system of the load energization by batteries loaded on a vehicle driven by an internal combustion engine characterized by consisting of :
the first and the second batteries with a common plus terminal and two independent minus terminals constituting the first and the second minus terminals respectively which are loaded on the said vehicle driven by the said engine,
a generator driven by the said engine loaded on the said vehicle for charging the said first and the said second batteries through two diodes connected with the said first and the said second minus terminals respectively,
an electric switch device used for a process in which turning an engine key inserted into a keyhole by the first set angle on the first stage makes the first electric switch closed, turning it further by the second set angle on the second stage keeps the said first electric switch closed, turning it further again by the third set angle on the third stage makes the second switch closed, and the removal of the force for turning it on the last stage makes it turn back to the said first or the said second set angle,
an electric circuit comprising the first and the second diodes connected with the said first minus terminal and the said second minus terminal respectively, the said common plus terminal, the said second electric switch and the first exciting coil in series,
an electromagnetic switch device used for a process in which the second and the third terminals alternate in being connected with the first terminal every time the said second electric switch is closed once for energizing the said first exciting coil,
a means for connecting the said second and the said third terminals with the said the first minus terminal of the said first battery and the said second minus terminal of the said second battery respectively,
the first electric circuit used for a process in which after the closing of the said second electric switch the second exciting coil in a relay for energizing a cell motor is energized, the electric switch in the said relay is closed, the said cell motor inserted between the said first terminal and the said common plus terminal is energized and the said engine is started, and
the second electric circuit inserted between the said common plus terminal and the said first terminal or the said first and the said second diode and used for a process in which the energization of the electric load is controlled through the said electric switch or each electric switch attached to each electric load.

13. A control system of the load energization by batteries loaded on a vehicle driven by an internal combustion engine as claimed in claim 12, wherein an electromagnetic switch device is characterized by consisting of :
an electromagnetic plunger fixed to a base plate,
a working element which moves in the absorption direction by a set stroke in parallel to the said base plate when an exciting coil in the said electromagnetic plunger is energized and moves back by a spring force when the energization of it is shut off,
a lever whose central portion is fixed to an end portion of the said working element so as to be perpendicular to it,
the first and the second projections projecting toward the said base plate surface from both ends of the said lever and tilting in the absorption direction,
a device which makes the said lever turn in the right or the reverse direction from the initial position in parallel to the said base plate only corresponding to a torque given in the right or the reverse direction respectively and turn back to the said initial position through the removal of the said torque,
a change lever supported by an axle perpendicular to the said base plate at its intermediate portion so as to turn freely between the said base plate and the said working element constituting the first lever and the second lever extending on both sides of the said axle respectively,
a device used for a process in which the movement of the said lever together with the said working element in the absorption direction through a pulse current energization of the said exciting coil makes the said change lever turn by a set angle through the said first projection coming into contact with the said first lever and the next movement of the said lever together with the said working element in the absorption direction through the next pulse current energization of the said exciting coil after the backward movement of the said working element by a spring force makes the change lever turn in the reverse direction by the set angle through the said second projection coming into contact with the said second lever followed by the next backward movement of the said working element by a spring force,
the first copper plate fixed to the said base plate,
the first and the second leaf springs whose end portions are fixed to the said base plate,
the second and the third copper plates fixed to the other end portions of the said first and the said second leaf springs respectively and arranged on both sides of the said first copper plate leaving spaces therebetween in parallel to it respectively,
a device which makes the said second or the said third copper plate come into contact with the said first copper plate for electric conduction through the press of the said first or the said second leaf spring by the end portion of the said change lever corresponding to its left or right turn, and
the first, the second and the third terminals connected with the said first, the said second and the said third copper plates respectively.

14. A control system of the load energization by batteries loaded on a vehicle driven by an internal combustion engine as claimed in claim 12, wherein an electromagnetic switch device is characterized by consisting of :
a rotary cam similar to a disk which rotates in one direction by 360/2n degrees (where n is equal to a positive integral number more than 1) every time an exciting coil of an electromagnetic plunger or a rotary solenoid is energized once,
n projections projecting at equal intervals along the circumference of the said rotary cam,
the first copper plate fixed to the said base plate,
the first and the second leaf springs whose end portions are fixed to the said base plate,
the second and the third copper plates fixed to the other end portions of the said first and the said second leaf springs and arranged on both sides of the said first copper plate in parallel to it leaving spaces therebetween,
a device used for a process in which the said projections along the circumference of the said rotary cam press the said first and the said second leaf springs alternately according to its rotation and make the said second and the said third copper plates come into contact with the said first copper plate for electric conduction alternately thereby, and
the first, the second and the third terminals connected with the said first, the said second and the said third copper plates respectively.
